# EUROPEAN PATENT APPLICATION

(11) **EP 4 598 073 A1**
(43) Date of publication of application: **06.08.2025**
(21) Application number: 23886071.2
(22) Date of filing: 17.10.2023
(51) Int. Cl.: H04W 8/00, H04W 76/14, H04W 84/12, H04W 88/06

(54) **ELECTRONIC DEVICE SUPPORTING DEVICE DISCOVERY ON BASIS OF D2D COMMUNICATION AND OPERATION METHOD OF ELECTRONIC DEVICE**

(30) Priority: 03.11.2022 KR 20220145218; 27.12.2022 KR 20220185996
(71) Applicant: Samsung Electronics Co., Ltd., Suwon-si, Gyeonggi-do 16677 (KR)
(72) Inventor: JUNG, Buseop, Suwon-si, Gyeonggi-do 16677 (KR); KIM, Junsung, Suwon-si, Gyeonggi-do 16677 (KR); LEE, Soonho, Suwon-si, Gyeonggi-do 16677 (KR)
(74) Representative: Appleyard Lees IP LLP
(86) International application number: PCT/KR2023/015986
(87) International publication number: WO 2024/096374

(57) **Abstract**

An embodiment of the present disclosure provides a method for supporting Wi-Fi P2P-based device discovery between electronic devices that support Wi-Fi, and an electronic device that supports same. The electronic device may comprise a first communication circuit configured to support D2D communication, a second communication circuit configured to support OOB communication, and a processor. The processor may sense initiation of a service. The processor may, on the basis of initiation of the service, configure a discovery protocol for each of multiple frequency bands related to discovery, using the first communication circuit, an external electronic device for which the service is to be performed. The processor may transmit a discovery mode start message via the second communication circuit. The processor may discover at least one external electronic device via the first communication circuit on the basis of the protocol corresponding to each of the multiple frequency bands. The processor may determine, as a service target device, one of the at least one discovered external electronic device. The processor may perform a procedure of connecting to the external electronic device determined as the service target device.

## Description

### [Technical Field]

An embodiment of the disclosure provides a method for supporting device discovery based on Wi-Fi peer-to-peer (P2P) between electronic devices supporting wireless fidelity (Wi-Fi), and an electronic device supporting the same.

### [Background Art]

With the development of digital technology, various types of electronic devices, such as mobile communication terminals, smartphones, tablet personal computers (PCs), notebooks, wearable devices, digital cameras, personal computers, or Internet of Things (IoT) devices, are widely used. In order to support and enhance functions of such electronic devices, hardware parts and/or software parts of the electronic devices are continuously being developed.

Recently, various types of proximity services utilizing low-power discovery technology are being developed. For example, proximity services (or proximity communication services), in which nearby electronic devices can quickly exchange data through a proximity network, are being developed. The proximity services may include a low-power proximity service using a Bluetooth low energy (BLE) beacon, a low-power proximity service based on a low-power short-range communication technology (e.g., neighbor awareness networking (NAN) or Wi-Fi aware) (hereinafter, referred to as "NAN") based on wireless fidelity (Wi-Fi), or a proximity service based on Wi-Fi direct.

According to an embodiment, based on the various technologies described above, an electronic device may provide a proximity service (e.g., a device-to-device (D2D) service) by directly establishing a communication connection (e.g., configuring a proximity network) with an external electronic device in proximity to the electronic device.

According to an embodiment, representative communication technologies recently used in proximity services may be, for example, Wi-Fi Direct technology and NAN technology. According to an embodiment, Wi-Fi Direct (or Wi-Fi peer-to-peer (P2P)) technology may refer to a technology that provides a direct connection between electronic devices which support Wi-Fi by using a Wi-Fi interface without an access point (AP) which is a medium of an infrastructure network. According to an embodiment, NAN technology may refer to a technology in which electronic devices within an NAN cluster synchronize their time clocks and exchange beacons and service discovery frames (SDFs) within the same discovery window (DW) interval.

Currently, an electronic device may basically support Wi-Fi Direct technology, and may selectively support NAN technology depending on the implementation of the electronic device. Therefore, the existing proximity service enables an electronic device to perform data communication by performing device discovery and connection based on Wi-Fi Direct technology or NAN technology depending on the support capability of an extemal electronic device (e.g., a target device for proximity services). For example, in the case of an electronic device, a Wi-Fi Direct function and an NAN function cannot be activated simultaneously during device discovery. Therefore, conventionally, an electronic device discovers an external electronic device through specified other communication (e.g., Bluetooth low energy (BLE) communication), and then, depending on the support capability of the extemal electronic device discovered through the other communication, uses Wi-Fi Direct technology or NAN technology to establish a communication connection, so as to provide a proximity service (e.g., D2D service). For example, conventionally, an electronic device may discover external electronic devices, based on BLE, determine to switch to NAN or Wi-Fi Direct depending on the support capability of the discovered extemal electronic devices, and then perform a discovery procedure again.

Therefore, the existing method of utilizing BLE for discovery may cause a degradation in discovery speed due to performing redundant device discovery processes such as a BLE-based discovery and an NAN or Wi-Fi Direct-based discovery based on a result of the discovery. In addition, since the method of utilizing BLE for discovery requires maintaining a BLE operation even after switching to Wi-Fi Direct or NAN, conflict (or interference) (coexistence) with BLE may occur even in a D2D operation that uses about 2.4 GHz band.

### [Disclosure of Invention]

### [Technical Problem]

An embodiment of the disclosure provides a method capable of supporting fast device discovery based on Wi-Fi peer-to-peer (P2P) between electronic devices supporting Wi-Fi and, an electronic device supporting the same.

An embodiment of the disclosure provides a method capable of supporting efficient and fast device discovery by using multiple bands to simultaneously use Wi-Fi device-to-device (D2D) technologies (e.g., low-power short-range communication technology based on neighbor awareness networking (NAN) (or Wi-Fi aware) and Wi-Fi Direct technology), and an electronic device supporting the same.

The technical tasks to be achieved herein may not be limited to the above-mentioned technical tasks, and other technical tasks not mentioned may be clearly understood, through the following descriptions, by those skilled in the art to which the disclosure belongs.

### [Solution to Problem]

An electronic device according to an embodiment of the disclosure may include a first communication circuit configured to support device-to-device (D2D) communication, a second communication circuit configured to support out-of-band (OOB) communication, and at least one processor operatively connected to the first communication circuit and the second communication circuit. The at least one processor according to an embodiment may operate to configure, based on detecting initiation of a service, a discovery protocol for each of multiple frequency bands related to discovering, using the first communication circuit, an external electronic device for which the service is to be performed. The at least one processor according to an embodiment may operate to transmit a discovery mode start message through the second communication circuit. The at least one processor according to an embodiment may operate to discover at least one extemal electronic device through the first communication circuit, based on a protocol corresponding to each of the multiple frequency bands. The at least one processor according to an embodiment may operate to determine one of the at least one discovered external electronic device as a service target device. The at least one processor according to an embodiment may operate to perform a connection procedure with the external electronic device determined as the service target device.

An operation method of an electronic device according to an embodiment of the disclosure may include performing an operation of configuring, based on detecting initiation of a service, a discovery protocol for each of multiple frequency bands related to discovering, using a first communication circuit configured to support device-to-device (D2D) communication, an external electronic device for which the service is to be performed. The operation method may include performing an operation of transmitting a discovery mode start message through a second communication circuit configured to support out-of-band (OOB) communication. The operation method may include performing an operation of discovering at least one external electronic device through the first communication circuit, based on a protocol corresponding to each of the multiple frequency bands. The operation method may include performing an operation of determining one of the at least one discovered external electronic device as a service target device. The operation method may include performing an operation of performing a connection procedure with the external electronic device determined as the service target device.

In order to solve the above-mentioned problem, various embodiments of the disclosure may include a computer-readable recording medium on which a program for executing the method on a processor is recorded.

According to an embodiment, a non-transitory computer-readable storage medium (or computer program product) storing one or more programs is described. According to an embodiment, the one or more programs may include instructions that perform, when executed by a processor of an electronic device, an operation of configuring, based on detecting initiation of a service, a discovery protocol for each of multiple frequency bands related to discovering, using a first communication circuit configured to support device-to-device (D2D) communication, an extemal electronic device for which the service is to be performed, an operation of transmitting a discovery mode start message through a second communication circuit configured to support out-of-band (OOB) communication, an operation of discovering at least one extemal electronic device through the first communication circuit, based on a protocol corresponding to each of the multiple frequency bands, an operation of determining one of the at least one discovered extemal electronic device as a service target device, and an operation of performing a connection procedure with the external electronic device determined as the service target device.

The additional scope of applicability of the disclosure will become apparent from the detailed description below. However, since various changes and modifications within the spirit and scope of the disclosure can be clearly understood by those skilled in the art, it should be understood that the detailed description and specific embodiments, such as preferred embodiments of the disclosure, are given merely by way of example.

### [Advantageous Effects of Invention]

According to an electronic device, an operation method thereof, and a recording medium according to an embodiment of the disclosure, a Wi-Fi P2P-based device discovery speed for a proximity service (e.g., a D2D service) can be improved by simultaneously using different frequency bands (or radio bands). According to an embodiment, the usability of a D2D service can be improved by improving the device discovery speed. According to an embodiment, a device discovery and communication connection may be supported regardless of the support capability of an extemal electronic device while improving the device discovery speed through simultaneous discovery of extemal electronic devices based on multiple frequency bands.

In addition to this, various effects directly or indirectly identified through this document may be provided. The effects obtainable from the disclosure are not limited to the above-mentioned effects, and other effects not mentioned may be clearly understood, through the following descriptions, by those skilled in the art to which the disclosure belongs.

### [Brief Description of Drawings]

In relation to the description of drawings, the same or similar reference numerals may be used for the same or similar components.
FIG. 1 is a block diagram illustrating an example electronic device in a network environment according to various embodiments.
FIG. 2 is a diagram illustrating an example in which electronic devices are connected in a P2P group according to an embodiment.
FIG. 3 is a diagram illustrating an example in which a first electronic device and a second electronic device are connected through Wi-Fi Direct according to an embodiment of the disclosure.
FIG. 4 is a diagram illustrating an example in which electronic devices are connected in an NAN cluster according to an embodiment.
FIG. 5 is a diagram illustrating an example of a protocol for transmitting a signal by an electronic device included in an NAN cluster according to an embodiment.
FIG. 6 is a diagram illustrating an example of data transmission and/or reception within an NAN cluster according to an embodiment.
FIG. 7 is a diagram schematically illustrating a configuration of an electronic device according to an embodiment of the disclosure.
FIG. 8 is a diagram illustrating an example in which an electronic device performs device discovery for an extemal electronic device according to an embodiment of the disclosure.
FIG. 9 is a flowchart illustrating an operation method of an electronic device according to an embodiment of the disclosure.
FIG. 10 is a flowchart illustrating an operation method of an electronic device according to an embodiment of the disclosure.
FIG. 11 is a flowchart illustrating an operation method of an electronic device according to an embodiment of the disclosure.
FIG. 12 is a diagram illustrating an example in which electronic devices operate based on a first discovery procedure according to an embodiment of the disclosure.
FIG. 13 is a diagram illustrating an example in which electronic devices operate based on a first discovery procedure according to an embodiment of the disclosure.
FIG. 14 is a flowchart illustrating an operation method of an electronic device according to an embodiment of the disclosure.
FIG. 15 is a diagram illustrating an example in which electronic devices operate based on a second discovery procedure according to an embodiment of the disclosure.
FIG. 16 is a diagram illustrating an example in which electronic devices operate based on a first discovery procedure according to an embodiment of the disclosure.
FIG. 17 is a flowchart illustrating an operation method of an electronic device according to an embodiment of the disclosure.

### [Mode for the Invention]

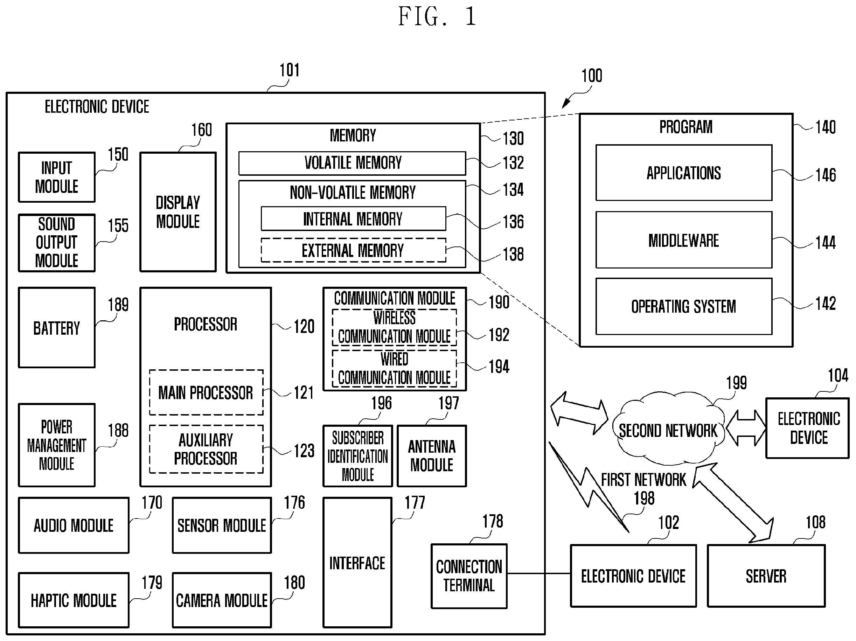

FIG. 1 is a block diagram illustrating an example electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) extemal to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the extemal electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the extemal electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the extemal electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more extemal electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

In the disclosure, a method for supporting device discovery based on Wi-Fi device-to-device (D2D) technology between electronic devices supporting Wi-Fi and an electronic device supporting the same are disclosed. According to an embodiment, the Wi-Fi D2D technology may include Wi-Fi Direct technology and neighbor awareness networking (NAN) (or Wi-Fi aware)-based low-power short-range communication technology (hereinafter, referred to as "NAN technology"). According to an embodiment, the Wi-Fi Direct technology and NAN technology will be described.

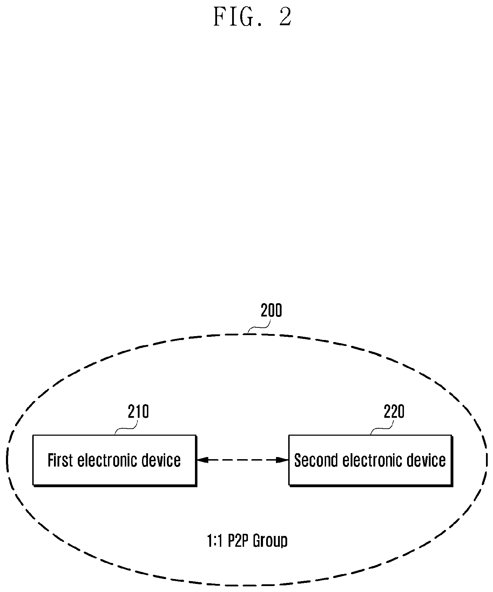

FIG. 2 is a diagram illustrating an example in which electronic devices are connected in a P2P group according to an embodiment.

According to an embodiment, Wi-Fi Direct (or Wi-Fi peer-to-peer (Wi-Fi P2P)) technology may refer to a technology that utilizes a Wi-Fi interface to provide a direct connection between electronic devices (e.g., Wi-Fi terminals) without an access point (AP), which is a medium of an infrastructure network.

Referring to FIG. 2, a connection using Wi-Fi Direct between electronic devices (e.g., a first electronic device 210 and a second electronic device 220) may be referred to as a P2P group 200. For example, the electronic devices (e.g., the first electronic device 210 and the second electronic device 220) may include the electronic device 101 of FIG. 1 or may include the same components as the electronic device 101.

According to an embodiment, the first electronic device 210 and the second electronic device 220 within the P2P group 200 may be directly connected through short-range wireless communication without going through separate entities (e.g., an access point (AP)). For example, the first electronic device 210 may perform direct wireless communication with the second electronic device 220 through short-range wireless communication. According to an embodiment, the second electronic device 220 may perform direct wireless communication with the first electronic device 210 through short-range wireless communication. The short-range wireless communication may refer to a communication scheme which can be supported by both the first electronic device 210 and the second electronic device 220. For example, the wireless communication may be Wi-Fi communication.

In an embodiment, short-range wireless communication used by the first electronic device 210 to exchange data may use various frequency bands including a first frequency band (e.g., about 2.4 GHz band), a second frequency band (e.g., about 5 GHz band), and/or a third frequency band (e.g., about 6 GHz band). For example, the first electronic device 210 may establish a channel included in one frequency band among multiple frequency bands, and exchange data by using the established channel.

According to an embodiment, the first electronic device 210 may serve as a base station which provides wireless communication to at least one electronic device (e.g., the second electronic device 220) located within a communication radius. According to an embodiment, the second electronic device 220 may serve as a station (STA).

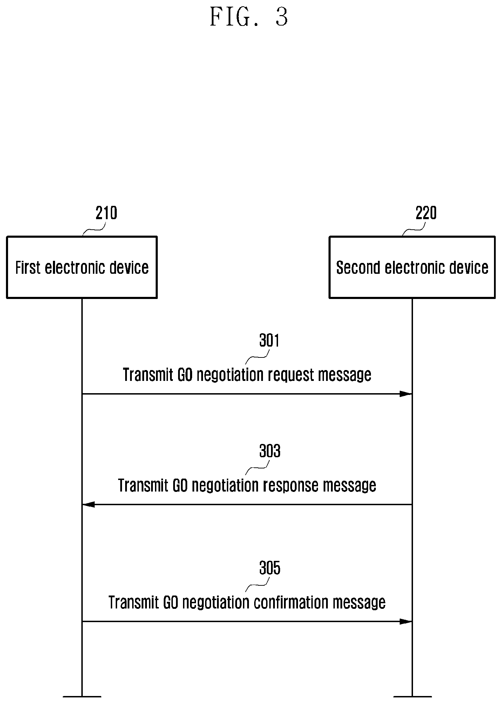

According to an embodiment, when assuming a 1:1 connection between the first electronic device 210 and the second electronic device 220, one electronic device (e.g., the first electronic device 210) may operate as a group owner (GO), and another electronic device (or peer device) (e.g., the second electronic device 220) may operate as a client. According to an embodiment, the group owner (e.g., the first electronic device 210) may perform a role (or function) like an AP of WLAN, and the client (e.g., the second electronic device 220) may perform a role like a station (STA) of the WLAN. In an embodiment, the roles of the electronic devices 210 and 220 within the P2P group 200 may be determined through a P2P protocol according to a Wi-Fi Direct connection procedure (e.g., Group Owner Negotiation). An example of this is illustrated in FIG. 3.

According to an embodiment, a connection between the electronic devices 210 and 220 in the P2P group 200 can be not only a 1:1 connection but also a 1:N connection (where N is a natural number greater than or equal to 2), and the number of acceptable clients may be determined according to the capability of the group owner (e.g., the first electronic device 210).

FIG. 3 is a diagram illustrating an example in which a first electronic device and a second electronic device are connected through Wi-Fi Direct according to an embodiment of the disclosure.

Referring to FIG. 3, FIG. 3 illustrates messages exchanged during negotiation for determining a group owner (GO) performed while a first electronic device (e.g., the first electronic device 210 of FIG. 2) and a second electronic device (e.g., the second electronic device 220 of FIG. 2) are connected through short-range wireless communication (e.g., Wi-Fi Direct).

In operation 301, the first electronic device 210 may transmit a GO negotiation request message to the second electronic device 220.

According to an embodiment, the first electronic device 210 may discover an extemal electronic device (e.g., the second electronic device 220) to be connected through short-range wireless communication in a discovery procedure, and transmit a GO negotiation request message to the discovered second electronic device 220.

According to an embodiment, the GO negotiation request message may include P2P information element (IE) information and Wi-Fi simple configuration information element (WSC IE) information. The P2P IE information may include a GO intent and operating channel attribute information which are available for determining a GO. The operating channel attribute information may include preferred channel information which is information related to a channel preferred by the first electronic device 210 among channels which may be established between the first electronic device 210 and the second electronic device 220, and/or preferred frequency band information which is information related to a frequency band preferred by the first electronic device 210. The preferred channel information may be included in a channel number field of an operating channel attribute field. The preferred frequency band information may be included in an operating class field of the operating channel attribute field.

In operation 303, the second electronic device 220 may transmit a GO negotiation response message to the first electronic device 210.

According to an embodiment, the GO negotiation response message may include P2P IE information and WSC IE information. The P2P IE information may include a GO intent and operating channel attribute information which are available for determining a GO. The operating channel attribute information may include preferred channel information which is information related to a channel preferred by the second electronic device 220 among channels which may be established between the first electronic device 210 and the second electronic device 220, and/or preferred frequency band information which is information related to a frequency band preferred by the second electronic device 220. The preferred channel information may be included in a channel number field of an operating channel attribute field. The preferred frequency band information may be included in an operating class field of the operating channel attribute field.

According to an embodiment, the first electronic device 210 may receive the GO negotiation response message and compare a GO intent included in the GO negotiation response message with a GO intent included in the GO negotiation request message. According to an embodiment, based on the comparison of the GO intents, an electronic device (e.g., the first electronic device 210) having transmitted a GO intent having a larger value may become a group owner (GO), and an electronic device (e.g., the second electronic device 220) having transmitted a GO intent having a smaller value may become a GC (group client). The GO may operate as a host in a short-range wireless communication system (e.g., the P2P group 200), and the GC may operate as a client in the short-range wireless communication system (e.g., the P2P group 200). For convenience of explanation, it is assumed that the first electronic device 210 performs the role of a GO.

The first electronic device 210 may select a channel to be used for a connection between the first electronic device 210 and the second electronic device 220, based on a preferred channel of the first electronic device 210, a preferred frequency band of the first electronic device 210, a preferred channel of the second electronic device 220, and/or a preferred frequency band of the second electronic device 220.

In operation 305, the first electronic device 210 may transmit a GO negotiation confirmation message (e.g., GO negotiation confirmation) to the second electronic device 220. According to an embodiment, the GO negotiation confirmation message may include information on the selected channel.

Referring to the above-described embodiment, in discovering an electronic device (e.g., the second electronic device 220) to be connected through a Wi-Fi Direct scheme, the first electronic device 210 may discover various electronic devices (e.g., the second electronic device 220) which support Wi-Fi Direct regardless of an AP (not shown).

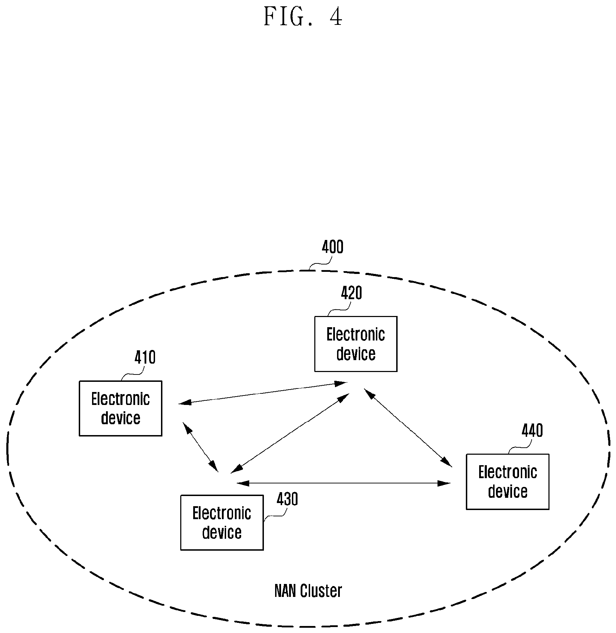

According to an embodiment, a communication scheme in which the first electronic device 210 and the second electronic device 220 are directly connected without going through separate entities may be defined as a D2D communication scheme. For example, the D2D communication scheme may refer to a communication scheme in which required data is exchanged without going through an access point (AP) in a process of setting up (or establishing) a communication channel between the first electronic device 210 and the second electronic device 220. According to an embodiment, the D2D communication scheme may include, for example, a Wi-Fi direct scheme as exemplified in FIGS. 2 and 3 and an NAN scheme as exemplified in FIG. 4.

FIG. 4 is a diagram illustrating an example in which electronic devices are connected in an NAN cluster according to an embodiment.

According to an embodiment, FIG. 4 may illustrate an example of a configuration of a neighbor awareness networking (NAN) cluster 400 for a proximity network. In the following description, the cluster 400 may refer to a set of electronic devices 410, 420, 430, or 440 constituting a proximity network so as to allow the respective electronic devices (or NAN devices) (e.g., the electronic device 101 of FIG. 1) 410, 420, 430, or 440 to mutually transmit and/or receive data. For example, the cluster 400 may be referred to as an NAN cluster according to the NAN specification (or standard).

Referring to FIG. 4, the cluster 400 may include the multiple electronic devices 410, 420, 430, or 440. The electronic devices 410, 420, 430, or 440 included within the cluster 400 may transmit and/or receive a beacon (or discovery beacon) and/or a service discovery frame (SDF) (hereinafter, referred to as an "SDF") within a synchronized time duration (or communication interval) (e.g., a discovery window (DW)).

The electronic devices 410, 420, 430, or 440 included within the cluster 400 may have their time clocks synchronized with each other. For example, the electronic devices 410, 420, 430, and 440 may be synchronized to the time clock of one electronic device (e.g., the electronic device 410) and may exchange beacons and SDFs with each other in the same discovery window (DW).

According to an embodiment, an electronic device supporting a low-power short-range communication technology based on NAN may broadcast a discovery signal (e.g., a beacon) for discovering another electronic device at every preconfigured first cycle (e.g., about 100 msec) and perform scanning at every preconfigured second cycle (e.g., about 10 msec) to receive the discovery signal broadcasted from the other electronic device.

According to an embodiment, the electronic devices 410, 420, 430, and 440 may detect at least one other electronic device located around the electronic devices, based on the discovery signal received through the scanning, and perform NAN cluster synchronization with the detected at least one other electronic device. **In an** embodiment, the NAN cluster synchronization may include an operation of receiving time clock information of an electronic device representing an NAN cluster so that electronic devices included in the NAN cluster transmit and/or receive data through the same channel and/or during the same time period.

For example, as illustrated in FIG. 4, each of the multiple electronic devices 410, 420, 430, or 440 may transmit a beacon and receive beacons from the other electronic devices 410, 420, 430, or 440, so as to form one cluster 400 that operates according to a synchronized time clock, and the electronic devices 410, 420, 430, or 440 within the cluster 400 may perform NAN cluster synchronization.

According to an embodiment, the NAN cluster synchronization may be performed with reference to a time and a channel of an electronic device having the highest master preference within the cluster 400. For example, the electronic devices 410, 420, 430, or 440 within the cluster 400 formed through discovery may exchange a signal regarding master preference information indicating a preference for operating as an anchor master, and may determine an electronic device having the highest master preference as an anchor master (or master electronic device) through the exchanged signal.

According to an embodiment, the anchor master may refer to an electronic device which serves as a reference for time and channel synchronization of the electronic devices 410, 420, 430, or 440 within the cluster 400. The anchor master may be changed based on a master preference of the electronic device. Each of the time and channel synchronized electronic devices 410, 420, 430, or 440 may transmit a beacon and an SDF and receive beacons and SDFs from the other electronic devices within the cluster 400, within a discovery window (or discovery interval) that is repeated according to a preconfigured cycle.

According to an embodiment, a beacon may be transmitted and/or received periodically during each discovery window to continuously maintain time and channel synchronization of the electronic devices 410, 420, 430, or 440 within the cluster 400. According to an embodiment, an SDF may be transmitted and/or received in a discovery window as needed to provide a service to the discovered electronic devices 410, 420, 430, or 440. According to an embodiment, an electronic device operating as an anchor master among the time and channel synchronized electronic devices 410, 420, 430, or 440 may transmit a beacon to detect a new electronic device during an interval between discovery windows.

According to an embodiment, each of the electronic devices 410, 420, 430, or 440 within the cluster 400 may operate in an active state only during a discovery window, and operate in a low-power state (e.g., a sleep state) during the remaining interval other than the discovery window, thereby reducing current consumption.

For example, a discovery window corresponds to a time (e.g., milliseconds) during which an electronic device is in an active state (or awake state), where a large amount of current consumption occurs, while the electronic device may remain in a sleep state during the remaining interval other than the discovery window, thereby enabling low-power discovery.

According to an embodiment, the electronic devices 410, 420, 430, or 440 within the cluster 400 may be simultaneously activated at a start time point (e.g., DW start) of a synchronized discovery window, and simultaneously switched to a sleep state at an end time point (e.g., DW end) of the discovery window.

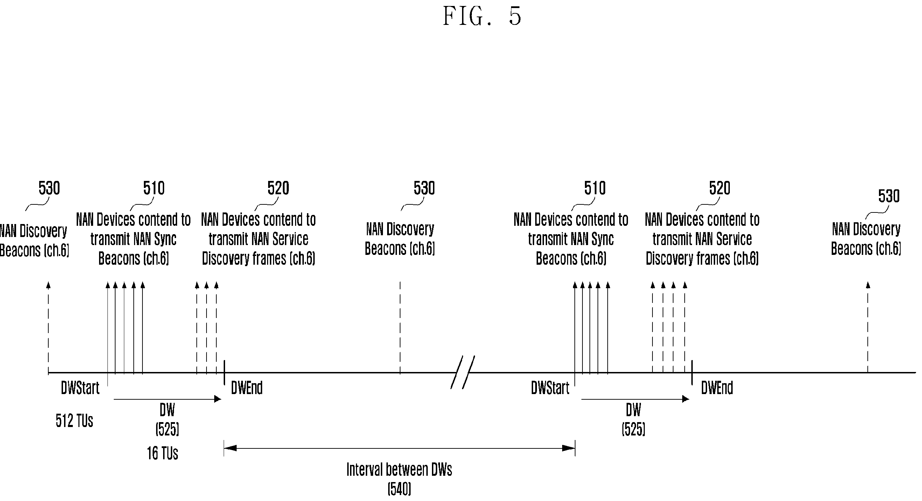

According to an embodiment, the electronic devices 410, 420, 430, or 440 included within the cluster 400 may perform discovery, synchronization, and data exchange operations by using a protocol illustrated in FIG. 5, which will be described later.

FIG. 5 is a diagram illustrating an example of a protocol for transmitting a signal by an electronic device included in an NAN cluster according to an embodiment.

For example, FIG. 5 may represent an example diagram for a discovery window according to an embodiment. FIG. 5 illustrates an example in which electronic devices included in one cluster transmit a signal through a specific channel (e.g., channel No. 6 (Ch6)) based on the NAN standard.

Referring to FIG. 5, electronic devices included in one cluster may transmit a synchronization beacon 510 and an SDF 520 in a synchronized discovery window (DW) 525. A discovery beacon 530 may be transmitted by at least one electronic device in another interval 540 (e.g., an interval between discovery windows) other than the discovery window 525. According to an embodiment, the electronic devices may transmit the synchronization beacon 510 and the SDF 520 on a contention basis. For example, the synchronization beacon 510 and the SDF 520 may be transmitted based on contention among respective electronic devices (e.g., the electronic devices 410, 420, 430, and 440 of FIG. 4) belonging to a cluster (e.g., the cluster 400 of FIG. 4).

According to an embodiment, the discovery window 525 may be an interval during which a corresponding electronic device is activated from a sleep state, which is a power-saving mode, to a wake-up state for data exchange between the respective electronic devices. For example, the discovery window 525 may be divided into time units (TUs) in milliseconds. According to an embodiment, the discovery window 525 for transmitting and/or receiving the synchronization beacon 510 and the SDF 520 may occupy 16 time units (TUs) (16 TUs), and may have a cycle (or interval) that is repeated with 512 time units (512 TUs).

According to an embodiment, the discovery beacon 530 may indicate a signal transmitted so that other electronic devices which have not joined the cluster can discover the cluster. For example, the discovery beacon 530 is a signal for notifying the existence of the cluster, and electronic devices which have not joined the cluster may perform a passive scan to receive the discovery beacon 530, thereby discovering and joining the cluster.

According to an embodiment, the discovery beacon 530 may include information necessary for synchronizing with the cluster. For example, the discovery beacon 530 may include at least one of a frame control (FC) field indicating a function (e.g., a beacon) of a signal, a broadcast address, a media access control (MAC) address of a transmission electronic device, a cluster identifier (ID), a sequence control field, a time stamp for a beacon frame, a beacon interval indicating a transmission interval of the discovery beacon 530, or capability information regarding a transmission electronic device transmitting the discovery beacon 530.

According to an embodiment, the discovery beacon 530 may include at least one proximity network (or cluster)-related information element (IE). In an embodiment, proximity network-related information may be referred to as attribute information.

According to an embodiment, the synchronization beacon 510 may indicate a signal for maintaining synchronization between synchronized electronic devices within a cluster. The synchronization beacon 510 may be transmitted by a synchronization device among the electronic devices within the cluster. For example, the synchronization device may include an anchor master electronic device, a master electronic device, or a non-master sync device as defined in the NAN standard.

According to an embodiment, the discovery beacon 510 may include information necessary for the electronic devices within the cluster to synchronize. For example, the synchronization beacon 510 may include at least one of an FC field indicating a function (e.g., a beacon) of a signal, a broadcast address, a MAC address of a transmission electronic device, a cluster identifier, a sequence control field, a time stamp for a beacon frame, a beacon interval indicating an interval between start points of the discovery window 525, or capability information for a transmission electronic device. According to an embodiment, the discovery beacon 510 may include at least one proximity network (or cluster)-related information element. For example, the proximity network-related information may include contents for a service provided through a proximity network.

According to an embodiment, the SDF 520 may represent a signal for exchanging data through the proximity network. According to an embodiment, the SDF 520 represents a vendor specific public action frame and may include various fields. For example, the SDF 520 may include a category or an action field, and may include at least one proximity network-related information.

As described above, the synchronization beacon 510, the SDF 520, and the discovery beacon 530 may include the proximity network-related information. In an embodiment, the proximity network-related information may include an identifier indicating the type of information, the length of the information, and a body field that is corresponding information. According to an embodiment, the corresponding information may include at least one of master indication information, cluster information, service identifier list information, service descriptor information, connection capability information, wireless LAN infrastructure information, peer-to-peer (P2P) operation information, independent basic service set (IBSS) information, mesh information, additional proximity network service discovery information, further availability map information, country code information, ranging information, cluster discovery information, or vendor specific information.

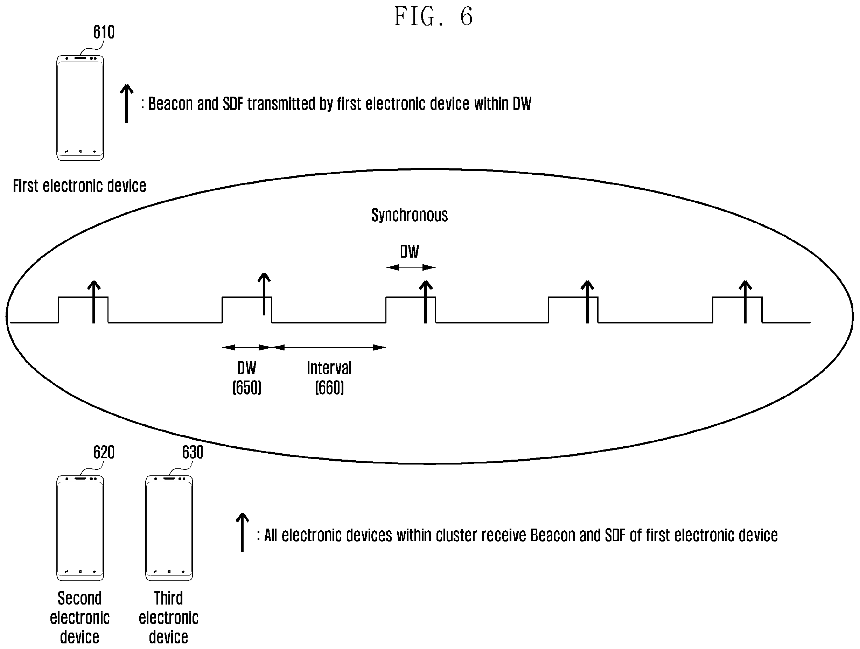

FIG. 6 is a diagram illustrating an example of data transmission and/or reception within an NAN cluster according to an embodiment.

For example, FIG. 6 illustrates an example in which a first electronic device 610, a second electronic device 620, and a third electronic device 630 form one cluster through a wireless short-range communication technology, and each of the electronic devices 610, 620, or 630 may transmit and/or receive a beacon and/or an SDF to/from one another. According to an embodiment, in FIG. 6, an example may be given in which the first electronic device 610 among the electronic devices 610, 620, or 630 configuring a cluster serves as a master electronic device.

Referring to FIG. 6, the first electronic device 610 may transmit a beacon and an SDF within a discovery window 650. According to an embodiment, the first electronic device 610 may broadcast a beacon and an SDF in each discovery window 650 that is repeated at every predetermined interval (e.g., an interval 660).

According to an embodiment, the second electronic device 620 and the third electronic device 630 may receive the beacon and the SDF transmitted by the first electronic device 610. According to an embodiment, each of the second electronic device 620 and the third electronic device 630 may receive the beacon and the SDF broadcasted from the first electronic device 610 in each discovery window 650.

According to an embodiment, the beacon transmitted within the discovery window 650 may indicate a synchronization beacon and may include information for maintaining synchronization between the electronic devices 610, 620, or 630. For example, the second electronic device 620 and/or the third electronic device 630 may perform NAN cluster synchronization, based on time clock information of the first electronic device 610 included in the beacon transmitted by the first electronic device 610 operating as a master. For example, the second electronic device 620 and/or the third electronic device 630 may be synchronized so that the discovery window 650 may be activated at the same time.

According to an embodiment, in an interval (e.g., the interval 660) other than the discovery window 650, the electronic devices 610, 620, or 630 may maintain a sleep state to reduce current consumption. For example, the electronic devices 610, 620, or 630 may operate in a wake state only in an interval of the discovery window 650, based on a synchronized time clock, so as to reduce current consumption.

In an embodiment of the disclosure, a method capable of supporting fast device discovery based on Wi-Fi P2P between electronic devices supporting Wi-Fi, and an electronic device supporting the same are provided. According to an embodiment, the electronic device 101 can improve the speed of device discovery, based on Wi-Fi D2D technology (e.g., a low-power short-range communication technology based on NAN (e.g., NAN technology) and Wi-Fi Direct technology). According to an embodiment, the electronic device 101 may use multiple bands (multi-band) (or multiple frequency bands (multi-frequency band)) to simultaneously use NAN technology and Wi-Fi Direct technology, so as to support device discovery.

According to an embodiment, the electronic device 101 may be connected to an extemal electronic device through various types of short-range wireless communication. For example, the electronic device 101 may transmit data (e.g., content) to the external electronic device or receive data from the external electronic device, and perform a service based on the data.

According to an embodiment, the electronic device 101 may be connected to the external electronic device through a first communication scheme (or a first protocol) or a second communication scheme (or a second protocol) of the short-range wireless communication. In an embodiment, the first communication scheme and the second communication scheme may include device-to-device communication (D2D) in the short-range wireless communication. According to an example, the first communication scheme may include NAN-based short-range wireless communication (hereinafter, referred to as "NAN technology" or "NAN communication"), and the second communication scheme may include Wi-Fi Direct-based short-range wireless communication (hereinafter, referred to as "Wi-Fi Direct technology" or "Wi-Fi Direct communication").

According to an embodiment, the electronic device 101 may be connected to the external electronic device through a third communication scheme of the short-range wireless communication. In an embodiment, the third communication scheme may include BLE-based short-range wireless communication in the short-range wireless communication.

According to an embodiment, when the extemal electronic device supports both the NAN technology of the first communication scheme and the Wi-Fi Direct technology of the second communication scheme, the electronic device 101 may be connected to the external electronic device through at least one of the first communication scheme or the second communication scheme of the short-range wireless communication. According to an embodiment, when the external electronic device does not support the NAN technology of the first communication scheme, the electronic device 101 may be connected to the external electronic device through the Wi-Fi Direct technology of the second communication scheme in the short-range wireless communication. According to an embodiment, the electronic device 101 may perform device discovery with the external electronic device, based on different frequency bands (e.g., multiple frequency bands) according to the first communication scheme and/or the second communication scheme.

Hereinafter, the electronic device 101 and its operation in various embodiments will be described.

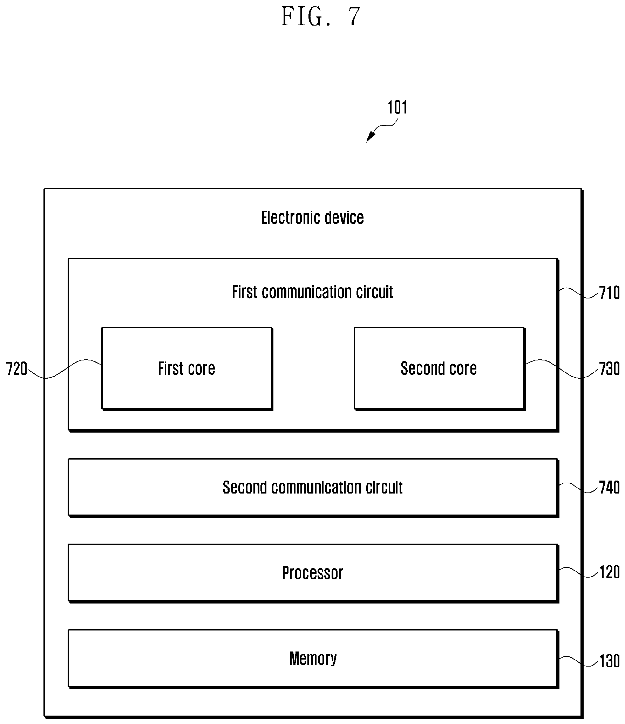

FIG. 7 is a diagram schematically illustrating a configuration of an electronic device according to an embodiment of the disclosure.

Referring to FIG. 7, the electronic device 101 according to an embodiment of the disclosure may include a first communication circuit 710, a second communication circuit 740, the memory 130, and/or the processor 120. According to an embodiment, the electronic device 101 may include all or at least a part of the components of the electronic device 101 as described in the description part referring to FIG. 1.

According to an embodiment, the first communication circuit 710 may correspond to the wireless communication module 192 as illustrated in FIG. 1. According to an embodiment, the first communication circuit 710 may support various communication schemes based on multiple bands (multi-band) (or multiple frequency bands (multi-frequency band)). According to an embodiment, the first communication circuit 710 may connect to and communicate with an external electronic device through a first communication scheme and/or a second communication scheme of short-range wireless communication. In an embodiment, the first communication scheme and the second communication scheme may include device-to-device communication (e.g., D2D communication) in the short-range wireless communication. According to an embodiment, the first communication scheme of the short-range wireless communication may include an NAN communication scheme. According to an embodiment, the second communication scheme of the short-range wireless communication may include a Wi-Fi Direct communication scheme.

According to an embodiment, the first communication circuit 710 may include various circuit structures used for modulation and/or demodulation of a signal within the electronic device 101. For example, the first communication circuit 710 may modulate a signal of a baseband into a signal of a radio frequency (RF) band so as to be output through an antenna (not shown), or demodulate a signal of an RF band received through the antenna into a signal of a baseband to transmit the demodulated signal to the processor 120.

According to an embodiment, the first communication circuit 710 may transmit or receive various data to or from the extemal electronic device through a frequency band (e.g., about 2.4 GHz band, about 5 GHz band, and/or about 6 GHz band) supported by the short-range wireless communication. According to an embodiment, the short-range wireless communication may include Wi-Fi communication defined in IEEE 802.11 WLAN.

According to an embodiment, the first communication circuit 710 may include multiple cores (e.g., baseband cores) for various frequency bands supported by the short-range wireless communication. For example, the first communication circuit 710 may include a first core 720 for a first baseband (e.g., about 5 GHz band) and a second core 730 for a second baseband (e.g., about 2.4 GHz band). In an embodiment, an example of two basebands and baseband cores (e.g., the first core 720 and the second core 730) corresponding thereto is described, but the number of baseband cores and supported basebands are not limited thereto. For example, the first communication circuit 710 may include a third core for a third baseband (e.g., about 6 GHz band), or may be implemented to support the third baseband in the first core 720 or the second core 730.

According to an embodiment, the first communication circuit 710 may support multiple frequency bands (or basebands) (e.g., dual bands), based on the first core 720 and the second core 730, and may support different frequency bands simultaneously without antenna switching. For example, the first communication circuit 710 may support dual Wi-Fi (e.g., real simultaneous dual band (RSDB) or dual band simultaneous (DBS)). According to an embodiment, the first communication circuit 710 may support different topologies simultaneously through the first core 720 and the second core 730 for supporting multiple frequency bands, and thus support data communication simultaneously in the multiple frequency bands (e.g., dual bands). According to an embodiment, the first communication circuit 710 may support fast device discovery based on Wi-Fi P2P, based on dual Wi-Fi in a discovery procedure for discovering an external electronic device.

According to an embodiment, the first communication circuit 710 may connect to and communicate with various extemal electronic devices through the first communication scheme and/or the second communication scheme, based on the control of the processor 120. According to an embodiment, the first communication circuit 710 may be connected to an external electronic device through the first communication scheme while being simultaneously connected to another external electronic device through the second communication scheme.

According to an embodiment, the second communication circuit 740 may correspond to the wireless communication module 192 as illustrated in FIG. 1. According to an embodiment, the second communication circuit 740 may support a third communication scheme based on out-of-band (OOB). According to an embodiment, the second communication circuit 740 may connect to and communicate with an extemal electronic device through the third communication scheme of the short-range wireless communication. In an embodiment, the third communication scheme may include Bluetooth or Bluetooth low energy (BLE).

According to an embodiment, the second communication circuit 740 may transmit or receive data to or from the extemal electronic device through a specified frequency band (e.g., about 2.4 GHz band) supported by the short-range wireless communication. According to an embodiment, the second communication circuit 740 may establish short-range wireless communication with the extemal electronic device, and perform data communication with the extemal electronic device.

According to an embodiment, the memory 130 may correspond to the memory 130 of FIG. 1. According to an embodiment, the memory 130 may store various data used by the electronic device 101. In an embodiment, the data may include input data or output data for an application (e.g., the program 140 of FIG. 1) and a command related to the application. In an embodiment, the data may include configuration information (or allocation information) regarding a preferred frequency band and a preferred channel (e.g., a discovery (or configuration) channel) for each communication scheme. In an embodiment, the data may include service-specific characteristic information capable of identifying service characteristics of a D2D service. In an embodiment, the data may include mapping information regarding a communication scheme assigned (or mapped) to each piece of service-specific characteristic information.

According to an embodiment, the memory 130 may store instructions that, when executed, cause the processor 120 to operate. For example, the application may be stored as software (e.g., the program 140 of FIG. 1) in the memory 130 and may be executable by the processor 120. According to an embodiment, the application may be various applications capable of providing various functions or services (e.g., a D2D service) in the electronic device 101.

According to an embodiment, the processor 120 may perform an application layer processing function requested by a user of the electronic device 101. According to an embodiment, the processor 120 may provide control and commands of functions for various blocks of the electronic device 101. According to an embodiment, the processor 120 may perform an operation or data processing related to control and/or communication of each component of the electronic device 101. For example, the processor 120 may include at least some of the configurations and/or the functions of the processor 120 of FIG. 1. The processor 120 may be operatively connected to, for example, the components of the electronic device 101. The processor 120 may load commands or data received from other components of the electronic device 101 into the memory 130, process the commands or the data stored in the memory 130, and store resulting data.

According to an embodiment, the processor 120 may be an application processor (AP). According to an embodiment, the processor 120 may be a system semiconductor responsible for an operation and a multimedia driving function of the electronic device 101. According to an embodiment, the processor 120 may be configured in the form of a system-on-chip (SoC), and may include a technology-intensive semiconductor chip which integrates multiple semiconductor technologies into one and implements system blocks into one chip. According to an embodiment, the system blocks of the processor 120 may include, for example, a graphics processing unit (GPU), an image signal processor (ISP), a central processing unit (CPU), a neural processing unit (NPU), a digital signal processor, a modem, connectivity, and/or a security block.

According to an embodiment, the modem may perform a role of enabling various communication functions to be used in the electronic device 101. For example, the modem may support communication such as call and data transmission and reception while transmitting and receiving a signal to and from a base station. According to an embodiment, the modem may include an integrated modem (e.g., a cellular modem, an LTE modem, a 5G modem, a 5G-Advanced modem, and a 6G modem) which supports communication technologies such as LTE and 2G to 5G. According to an embodiment, the modem may include an AI modem to which an AI algorithm is applied.

In an embodiment, the connectivity may support wireless data transmission based on IEEE 802.11. According to an embodiment, the connectivity may support a communication service based on IEEE 802.11 (e.g., Wi-Fi) and/or 802.15 (e.g., Bluetooth, ZigBee, or UWB). For example, the connectivity may support a communication service targeting an unspecified number of people in a localized area such as indoors by using an unlicensed band.

According to an embodiment, the processor 120 may be a communication processor (CP) which receives data transmitted by the application processor and generates a packet for transmitting the received data to an extemal electronic device. For example, the processor 120 may be defined as a processor included in a communication module (e.g., the wireless communication module 192 of FIG. 1). According to an embodiment, the processor 120 may be implemented by being integrated with the first communication circuit 710 into one physical chip.

According to an embodiment of the disclosure, the processor 120 may include processing circuitry and/or executable program elements. According to an embodiment, the processor 120 may control (or process) an operation related to supporting a D2D service capable of exchanging data by directly connecting to an extemal electronic device adjacent to the periphery of the electronic device 101, based on the processing circuitry and/or the executable program elements. According to an embodiment, the processor 120 may control (or process) an operation related to supporting device discovery simultaneously in multiple frequency bands based on the first communication scheme (e.g., NAN communication) and/or the second communication scheme (e.g., Wi-Fi Direct communication) according to activation (or initiation) of a service using short-range wireless communication.

According to an embodiment, the processor 120 may detect initiation of the service. According to an embodiment, the processor 120 may perform an operation of configuring, based on detecting the initiation of the service, a discovery protocol for each of multiple frequency bands related to discovering, using the first communication circuit 710, an extemal electronic device for which the service is to be performed. According to an embodiment, the processor 120 may perform an operation of transmitting a discovery mode start message including configuration information regarding the configured discovery protocol by using OOB through the second communication circuit 740. According to an embodiment, the processor 120 may perform an operation of discovering extemal electronic devices through the first communication circuit 710, based on a protocol corresponding to each of the multiple frequency bands. According to an embodiment, the processor 120 may perform an operation of determining a service target device among at least one discovered extemal electronic device. According to an embodiment, the processor 120 may perform a connection procedure with the determined external electronic device.

According to an embodiment, a detailed operation of the processor 120 of the electronic device 101 is described with reference to the drawings described below.

According to an embodiment, the operations performed by the processor 120 may be implemented as a recording medium (or computer program product). For example, the recording medium may include a non-transitory computer-readable recording medium on which a program for executing various operations performed by the processor 120 is recorded.

The embodiments described in this disclosure may be implemented in a recording medium readable by a computer or a similar device by using software, hardware, or a combination thereof. In terms of hardware implementation, operations described in an embodiment may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or other electrical units for performing functions.

In an embodiment, the recording medium (or computer program product) may include a computer-readable recording medium having recorded thereon a program for executing an operation of configuring, based on detecting initiation of a service, a discovery protocol for each of multiple frequency bands related to discovering, using the first communication circuit 710 configured to support device-to-device (D2D) communication, an external electronic device for which the service is to be performed, an operation of transmitting a discovery mode start message including configuration information regarding the configured discovery protocol by using out-of-band (OOB) through the second communication circuit 740 configured to support OOB communication, an operation of discovering external electronic devices through the first communication circuit 710, based on a protocol corresponding to each of the multiple frequency bands, an operation of determining a service target device among at least one discovered external electronic device, and an operation of performing a connection procedure with the determined extemal electronic device.

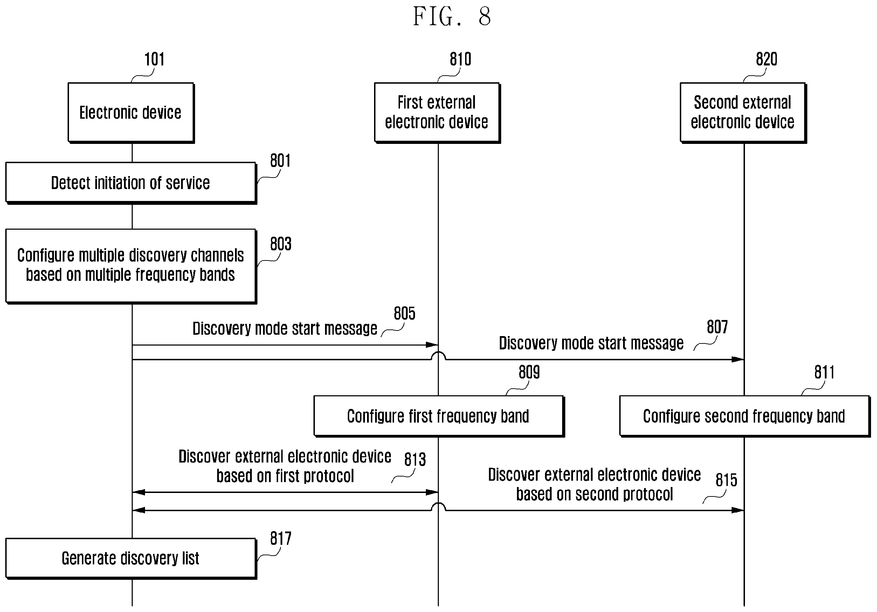

FIG. 8 is a diagram illustrating an example in which an electronic device performs device discovery for an extemal electronic device according to an embodiment of the disclosure.

According to an embodiment, FIG. 8 may illustrate an example in which the electronic device 101 (e.g., the first electronic device 610 of FIG. 6) discovers a first extemal electronic device 810 (e.g., the second electronic device 620 of FIG. 6) and a second extemal electronic device 820 (e.g., the second electronic device 630 of FIG. 6), based on different multiple frequency bands based on a first communication scheme and/or a second communication scheme.

According to an embodiment, it may be assumed that the electronic device 101 is an electronic device capable of supporting both the first communication scheme (or a first protocol) and the second communication scheme (or a second protocol). According to an embodiment, it may be assumed that the first external electronic device 810 is an electronic device capable of supporting both the first communication scheme and the second communication scheme. According to an embodiment, it may be assumed that the second external electronic device 820 is an electronic device which does not support the first communication scheme and is capable of supporting the second communication scheme.

Referring to FIG. 8, in operation 801, the electronic device 101 may detect initiation of a service. According to an embodiment, the electronic device 101 may receive, from a user, a user input (e.g., a request to execute an application capable of performing a service by using short-range wireless communication) for initiating a D2D service (e.g., a Wi-Fi P2P-based service) based on a connection with an external electronic device. According to an embodiment, the electronic device 101 may determine initiation of the service, based on receiving the user input. In an embodiment, the service using short-range wireless communication may include various Wi-Fi P2P-based services such as a content transmission service which transmits data (or content) temporarily or non-temporarily stored in the electronic device 101 to the extemal electronic device, a device-to-device continuity service, or a device-to-device screen sharing service. For example, the service using the short-range wireless communication may include various D2D services which can be provided based on a direct connection between the electronic device 101 and the extemal electronic device.

In operation 803, the electronic device 101 may configure, based on detecting the initiation of the service, multiple channels (e.g., a discovery channel or a configuration channel), based on each of a first frequency band and a second frequency band. According to an embodiment, the electronic device 101 may activate, based on detecting the initiation of the service, an interface for the first communication scheme (or the first protocol) and the second communication scheme (or the second protocol) through the first communication circuit 710 (e.g., the first communication circuit 710 of FIG. 7). For example, the electronic device 101 may control the first communication circuit 710 to activate the short-range wireless communication in response to the activation of the service using the short-range wireless communication. According to an embodiment, the electronic device 101 may control the first communication circuit 710 to activate the short-range wireless communication when an application capable of performing the service using the short-range wireless communication is executed, or when the application capable of performing the service using the short-range wireless communication requests to perform the service using the short-range wireless communication.

According to an embodiment, the electronic device 101 may activate an interface of the first communication scheme and an interface of the second communication scheme for device-to-device communication in the short-range wireless communication, and discover an extemal electronic device to be connected to the electronic device 101, based on each of the first communication scheme and the second communication scheme. According to an embodiment, the first communication scheme of the short-range wireless communication may include an NAN communication scheme. According to an embodiment, the second communication scheme of the short-range wireless communication may include a Wi-Fi Direct communication scheme. According to an embodiment, the electronic device 101 may configure a first frequency band (e.g., about 5 GHz band) and a discovery channel to be used for device discovery based on a P2P protocol, based on the first core 720 of the first communication circuit 710. According to an embodiment, the electronic device 101 may configure a second frequency band (e.g., about 2.4 GHz band) and a discovery channel to be used for device discovery based on the P2P protocol, based on the second core 730 of the first communication circuit 710.

In operations 805 and 807, the electronic device 101 may transmit (e.g., broadcast) a discovery mode start message by using the second communication circuit 740. In an embodiment, operations 805 and 807 may be performed in parallel or substantially simultaneously. According to an embodiment, the discovery mode start message may include configuration information regarding multiple frequency bands that the electronic device 101 supports for the short-range wireless communication.

According to an embodiment, the configuration information regarding the multiple frequency bands may include configuration information regarding a frequency band and a discovery channel corresponding to each of heterogeneous communication schemes, such as the first communication scheme and the second communication scheme. For example, the discovery mode start message may include information (or first protocol information) on a first frequency band related to the first communication scheme and a channel allocated (or configured) in the first frequency band, and information (or second protocol information) on a second frequency band related to the second communication scheme and a channel allocated (or configured) in the second frequency band. For example, the configuration information may include band information and channel information related to the multiple frequency bands according to heterogeneous protocols.

According to an embodiment, the configuration information regarding the multiple frequency bands may include configuration information regarding frequency bands and discovery channels respectively corresponding to dual bands in a homogeneous communication scheme (e.g., the second communication scheme). For example, the discovery mode start message may include information on a first frequency band related to one communication scheme and a channel allocated (or configured) in the first frequency band, and information on a second frequency band and a channel allocated (or configured) in the second frequency band. For example, the configuration information may include band information and channel information related to the multiple frequency bands according to a homogeneous protocol.

According to an embodiment, the electronic device 101 may control the second communication circuit 740 (e.g., the second communication circuit 740 of FIG. 7) to broadcast, through a third communication scheme, the discovery mode start message including configuration information for simultaneously discovering at least one external electronic device supporting the first communication scheme and/or the second communication scheme. According to an embodiment, the electronic device 101 may transmit the discovery mode start message to external electronic devices (e.g., the first extemal electronic device 810 and the second external electronic device 820) located around the electronic device 101 by using the second communication circuit 740, based on out-of-band (OOB).

In operations 809 and 811, the first external electronic device 810 and the second extemal electronic device 820 may receive the discovery mode start message transmitted (e.g., broadcasted) by the electronic device 101 by using the third communication scheme. According to an embodiment, the first external electronic device 810 and the second extemal electronic device 820 may receive the discovery mode start message transmitted by the electronic device 101 through the OOB. According to an embodiment, the first extemal electronic device 810 and the second extemal electronic device 820 may determine that reception of the discovery mode start message is a trigger for activating a D2D service. According to an embodiment, the first external electronic device 810 and the second extemal electronic device 820 may identify the configuration information included in the discovery mode start message. According to an embodiment, the first extemal electronic device 810 and the second external electronic device 820 may determine a communication scheme (or protocol) and/or a frequency band to be used for discovery of the electronic device 101, based on the configuration information.

According to an embodiment, in the example of FIG. 8, it may be assumed that the first external electronic device 810 is an electronic device capable of supporting both the first communication scheme and the second communication scheme. According to an embodiment, when the first external electronic device 810 receives the discovery mode start message from the electronic device 101 through the OOB, the first extemal electronic device 810 may identify that the electronic device 101 supports the first communication scheme (e.g., the first protocol), based on the configuration information.

According to an embodiment, in operation 809, the first extemal electronic device 810 may determine the first communication scheme as the communication scheme to be used for discovery of the electronic device 101. For example, the first extemal electronic device 810 may configure a first frequency band and/or a first discovery channel in response to the determination of the first communication scheme. According to an embodiment, the first extemal electronic device 810 may determine one of the first communication scheme or the second communication scheme, based on whether the discovery mode start message transmitted by the electronic device 101 includes information related to the first communication scheme, and perform discovery with the electronic device 101, based on the determined communication scheme.

According to an embodiment, the first extemal electronic device 810 may determine the first communication scheme (e.g., the NAN communication scheme) having relatively high performance (or new technology) when supporting the first communication scheme and the second communication scheme. According to an embodiment, the first external electronic device 810 may determine the first communication scheme or the second communication scheme according to various states of the first external electronic device 810. According to an embodiment, the first extemal electronic device 810 may determine the second communication scheme according to a state of the first extemal electronic device 810, even in a state where priority is designated to the first communication scheme. For example, the first extemal electronic device 810 may determine a communication scheme for discovery and connection as the second communication scheme when the second communication scheme is activated or when the second communication scheme is already in use.

According to an embodiment, in the example of FIG. 8, it may be assumed that the second extemal electronic device 820 is an electronic device which does not support the first communication scheme and is capable of supporting the second communication scheme. According to an embodiment, when the second extemal electronic device 820 receives the discovery mode start message from the electronic device 101 through the OOB, the second external electronic device 820 may identify that the electronic device 101 supports the second communication scheme (e.g., the second protocol), based on the configuration information.

According to an embodiment, in operation 811, the second external electronic device 820 may determine the second communication scheme as the communication scheme to be used for discovery of the electronic device 101. For example, the second external electronic device 820 may configure a second frequency band and/or a second discovery channel in response to the determination of the second communication scheme. According to an embodiment, the second external electronic device 820 may determine the second communication scheme, based on whether the discovery mode start message transmitted by the electronic device 101 includes information related to the second communication scheme, and perform discovery with the electronic device 101, based on the determined second communication scheme.

According to an embodiment, operations 809 and 811 may be performed substantially simultaneously.

In operations 813 and 815, the electronic device 101 may perform discovery, based on a communication scheme (e.g., a protocol) corresponding to each of the first extemal electronic device 810 and the second external electronic device 820.

According to an embodiment, the electronic device 101 may control the first communication circuit 710 to receive signals of various frequency bands in order to discover an extemal electronic device to be connected through the first communication scheme or the second communication scheme. According to an embodiment, the electronic device 101 may control the first communication circuit 710 (e.g., the first core 720) to receive a signal of the first frequency band, and control the first communication circuit 710 (e.g., the second core 730) to receive a signal of the second frequency band different from the first frequency band.

According to an embodiment, in operation 813, the electronic device 101 may discover the first external electronic device 810 based on the first communication scheme. According to an embodiment, although FIG. 8 illustrates the first extemal electronic device 810, the electronic device 101 according to an embodiment may discover at least one extemal electronic device supporting the first communication scheme, based on the first communication scheme.

According to an embodiment, in operation 815, the electronic device 101 may discover the second extemal electronic device 820 based on the second communication scheme. According to an embodiment, although FIG. 8 illustrates the second extemal electronic device 820, the electronic device 101 according to an embodiment may discover at least one extemal electronic device supporting the second communication scheme, based on the second communication scheme.

According to an embodiment, FIG. 8 illustrates that the electronic device 101 discovers extemal electronic devices (e.g., the first external electronic device 810 and the second extemal electronic device 820), but the disclosure is not limited thereto. For example, an operation of performing discovery in a channel of a frequency band synchronized between the electronic device 101 and the extemal electronic devices (e.g., the first extemal electronic device 810 and the second external electronic device 820) may include a scheme in which the electronic device 101 proactively transmits a discovery request message and receives a response message corresponding thereto from the external electronic devices as in the example of FIG. 8. For example, the operation of performing discovery in the channel of the frequency band synchronized between the electronic device 101 and the external electronic devices (e.g., the first extemal electronic device 810 and the second external electronic device 820) may include a scheme in which the external electronic devices transmit a discovery request message in a synchronized channel, and the electronic device 101 transmits a response message corresponding to the discovery request message to the extemal electronic devices while listening in the synchronized channel.

In operation 817, the electronic device 101 may generate a discovery list. According to an embodiment, the electronic device 101 may generate a discovery list, based on at least one extemal electronic device (e.g., the first extemal electronic device 810) discovered based on the first communication scheme and at least one extemal electronic device (e.g., the second extemal electronic device 820) discovered based on the second communication scheme.

According to an embodiment, the electronic device 101 may determine (or select) an external electronic device to be connected from among the at least one extemal electronic device according to the discovery list. According to an embodiment, when the extemal electronic device to be connected is determined, the electronic device 101 may perform a connection with the determined external electronic device through the communication scheme used for discovery of the extemal electronic device. According to an embodiment, when the determined extemal electronic device is the first extemal electronic device 810, the electronic device 101 may control the first communication circuit 710 to perform a connection with the first extemal electronic device 810 through the first communication scheme used for discovery of the first extemal electronic device 810. According to an embodiment, when the determined external electronic device is the second external electronic device 820, the electronic device 101 may control the first communication circuit 710 to perform a connection with the second external electronic device 820 through the second communication scheme used for discovery of the second extemal electronic device 820.

The electronic device 101 according to an embodiment of the disclosure may include a first communication circuit (e.g., the wireless communication module 192 of FIG. 1 and/or the first communication circuit 710 of FIG. 7) configured to support device-to-device (D2D) communication, a second communication circuit (e.g., the wireless communication module 192 of FIG. 1 and/or the second communication circuit 740 of FIG. 7) configured to support out-of-band (OOB) communication, and at least one processor (e.g., the processor 120 of FIG. 1 and/or FIG. 7) operatively connected to the first communication circuit and the second communication circuit.

According to an embodiment, the at least one processor 120 may detect initiation of a service. According to an embodiment, the at least one processor 120 may operate to configure, based on detecting the initiation of the service, a discovery protocol for each of multiple frequency bands related to discovering, using the first communication circuit, an extemal electronic device for which the service is to be performed. According to an embodiment, the at least one processor 120 may operate to transmit a discovery mode start message through the second communication circuit. According to an embodiment, the at least one processor 120 may operate to discover at least one external electronic device through the first communication circuit, based on a protocol corresponding to each of the multiple frequency bands. According to an embodiment, the at least one processor 120 may operate to determine one of the at least one discovered extemal electronic device as a service target device. According to an embodiment, the at least one processor 120 may operate to perform a connection procedure with the external electronic device determined as the service target device.

According to an embodiment, the service may include a D2D service which can be provided based on a direct connection with the extemal electronic device determined as the service target device.

According to an embodiment, the discovery mode start message may include configuration information regarding the discovery protocol.

According to an embodiment, the configuration information may include information on different frequency bands related to a first protocol for simultaneously discovering the at least one external electronic device and/or a second protocol different from the first protocol.

According to an embodiment, the at least one processor 120 may operate to transmit the discovery mode start message including the configuration information regarding the configured discovery protocol by using OOB communication through the second communication circuit.

According to an embodiment, the at least one processor 120 may operate to configure multiple discovery channels, based on each of a first frequency band and a second frequency band different from the first frequency band, based on heterogeneous protocols or a homogeneous protocol.

According to an embodiment, the at least one processor 120 may operate to perform discovery with at least one first extemal electronic device, based on a first protocol, and to perform discovery with at least one second external electronic device, based on a second protocol.

According to an embodiment, the at least one processor 120 may operate to discover, based on a first frequency band according to a first protocol, at least one first extemal electronic device having determined a discovery mode in the first frequency band, and to discover, based on a second frequency band according to a second protocol different from the first protocol, at least one second external electronic device having determined a discovery mode in the second frequency band.

According to an embodiment, the at least one processor 120 may operate to discover, based on a first frequency band according to a specified protocol, at least one first external electronic device having determined a discovery mode in the first frequency band, and to discover, based on a second frequency band according to the specified protocol, at least one second external electronic device having determined a discovery mode in the second frequency band.

According to an embodiment, the at least one processor 120 may operate to generate a discovery list related to at least one external electronic device discovered based on the multiple frequency bands, and to determine at least one external electronic device to be connected for the service as the service target device, based on the discovery list.

According to an embodiment, the at least one processor 120 may operate to perform a direct connection with the extemal electronic device determined as the service target device, based on a protocol used to discover the external electronic device determined as the service target device.

According to an embodiment, when the external electronic device determined as the service target device is a first extemal electronic device supporting a first protocol, the at least one processor 120 may operate to perform a connection procedure with the first external electronic device through the first protocol used for discovery of the first extemal electronic device. According to an embodiment, when the extemal electronic device determined as the service target device is a second extemal electronic device supporting a second protocol, the at least one processor 120 may operate to perform a connection procedure with the second external electronic device through the second protocol used for discovery of the second extemal electronic device.

Hereinafter, an operation method of the electronic device 101 according to various embodiments will be described in detail. The operations performed by the electronic device 101 according to various embodiments may be executed by the processor 120 including various processing circuitry and/or executable program elements of the electronic device 101. According to an embodiment, the operations performed by the electronic device 101 may be executed by instructions which are stored in the memory 130 and, when executed, cause the processor 120 to operate.

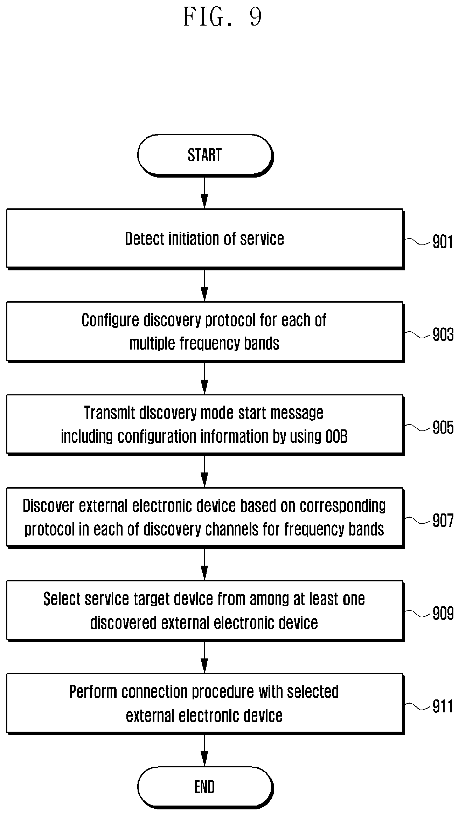

FIG. 9 is a flowchart illustrating an operation method of an electronic device according to an embodiment of the disclosure.

According to an embodiment, FIG. 9 may illustrate an example of supporting device discovery for an extemal electronic device to be connected to a D2D service based on multiple frequency bands in the electronic device 101 according to an embodiment.

In the electronic device 101 according to an embodiment of the disclosure, a device discovery method based on multiple frequency bands may be performed, for example, according to the flowchart illustrated in FIG. 9. The flowchart illustrated in FIG. 9 is merely a flowchart according to an embodiment of the device discovery method of the electronic device 101, and the order of at least some operations may be changed, performed in parallel, or performed as independent operations, or at least some other operations may be performed complementarily to the at least some operations. According to an embodiment of the disclosure, operations 901 to 911 may be performed in at least one processor 120 of the electronic device 101.

According to an embodiment, the operations described in FIG. 9 may be performed heuristically, for example, in combination with the operations described in FIGS. 2 to 8, or may be performed heuristically as detailed operations of at least some of the described operations.

As illustrated in FIG. 9, an operation method (e.g., an operation method for supporting device discovery based on multiple frequency bands) performed by the electronic device 101 according to an embodiment may include an operation of detecting initiation of a service (901), an operation of configuring a discovery protocol for each of multiple frequency bands (903), an operation of transmitting a discovery mode start message including configuration information by using OOB (905), an operation of discovering external electronic devices, based on a corresponding protocol in each of multiple discovery channels for the frequency bands (907), an operation of selecting a service target device from among at least one discovered extemal electronic device (909), and an operation of performing a connection procedure with the selected extemal electronic device (911).

Referring to FIG. 9, in operation 901, the processor 120 of the electronic device 101 may perform an operation of detecting initiation of a service. According to an embodiment, the electronic device 101 may receive, from a user, a user input (e.g., a request to execute an application capable of performing a service by using short-range wireless communication) for initiating a D2D service (e.g., a Wi-Fi P2P-based service) based on a connection with an external electronic device. According to an embodiment, the electronic device 101 may determine initiation of the service, based on receiving the user input. In an embodiment, the service using short-range wireless communication may include various Wi-Fi P2P-based services such as a content transmission service which transmits data (or content) temporarily or non-temporarily stored in the electronic device 101 to the external electronic device, a device-to-device continuity service, or a device-to-device screen sharing service. For example, the service using the short-range wireless communication may include various D2D services which can be provided based on a direct connection between the electronic device 101 and the external electronic device.

In operation 903, the processor 120 may perform an operation of configuring a discovery protocol for each of multiple frequency bands. According to an embodiment, the processor 120 may configure, based on detecting the initiation of the service, a discovery protocol for each of the multiple frequency bands related to discovering, using the first communication circuit, an extemal electronic device for which the service is to be performed. According to an embodiment, the processor 120 may configure, based on detecting the initiation of the service, multiple channels (e.g., a discovery channel or a configuration channel), based on each of a first frequency band and a second frequency band.

According to an embodiment, the processor 120 may activate, based on detecting the initiation of the service, an interface for a first communication scheme (or a first protocol) and a second communication scheme (or a second protocol) through the first communication circuit 710 (e.g., the first communication circuit 710 of FIG. 7). For example, the processor 120 may control the first communication circuit 710 to activate the short-range wireless communication in response to the activation of the service using the short-range wireless communication. According to an embodiment, the electronic device 101 may control the first communication circuit 710 to activate the short-range wireless communication when an application capable of performing the service using the short-range wireless communication is executed, or when the application capable of performing the service using the short-range wireless communication requests to perform the service using the short-range wireless communication.

In operation 905, the processor 120 may perform an operation of transmitting (e.g., broadcasting) a discovery mode start message including configuration information (e.g., configuration information regarding the configured discovery protocol) by using OOB. According to an embodiment, the discovery mode start message may include configuration information regarding the first communication scheme and the second communication scheme through which the electronic device 101 supports the short-range wireless communication. For example, the discovery mode start message may include information on different frequency bands related to the first communication scheme and/or the second communication scheme. According to an embodiment, the discovery mode start message may include information on the first frequency band and a channel allocated (or configured) in the first frequency band, and information on the second frequency band different from the first frequency band and a channel allocated (or configured) in the second frequency band.

According to an embodiment, the processor 120 may control the second communication circuit 740 (e.g., the second communication circuit 740 of FIG. 7) to broadcast the discovery mode start message including configuration information for simultaneously discovering at least one extemal electronic device supporting the first communication scheme (or the first protocol) and/or the second communication scheme (or the second protocol). According to an embodiment, the processor 120 may transmit the discovery mode start message to extemal electronic devices (e.g., the first external electronic device 810 and the second extemal electronic device 820 of FIG. 8) located around the electronic device 101 by using the second communication circuit 740, based on the OOB.

In operation 907, the processor 120 may perform an operation of discovering extemal electronic devices, based on a corresponding protocol in each of multiple discovery channels for the frequency bands. According to an embodiment, the processor 120 may perform discovery, based on a communication scheme (e.g., a protocol) corresponding to each of the first external electronic device 810 and the second external electronic device 820. According to an embodiment, the processor 120 may control the first communication circuit 710 to receive signals of various frequency bands in order to discover an external electronic device to be connected through the first communication scheme or the second communication scheme. According to an embodiment, the processor 120 may control the first communication circuit 710 (e.g., the first core 720) to receive a signal of the first frequency band, and control the first communication circuit 710 (e.g., the second core 730) to receive a signal of the second frequency band different from the first frequency band.

According to an embodiment, the processor 120 may discover at least one first extemal electronic device having determined (or configured) a discovery mode by using the first communication scheme, based on the first communication scheme. For example, the processor 120 may operate to discover the first external electronic device, based on the first protocol in a first discovery channel of the first frequency band, based on discovery configuration. According to an embodiment, the processor 120 may discover at least one second extemal electronic device having determined a discovery mode by using the second communication scheme, based on the second communication scheme. For example, the processor 120 may operate to discover the second external electronic device, based on the second protocol in a second discovery channel of the second frequency band, based on discovery configuration.

In operation 909, the processor 120 may perform an operation of selecting a service target device from among at least one discovered extemal electronic device. According to an embodiment, the processor 120 may generate a discovery list related to at least one extemal electronic device discovered respectively through the multiple discovery channels of the multiple frequency bands according to the first communication scheme and the second communication scheme. According to an embodiment, the processor 120 may generate a discovery list, based on at least one extemal electronic device (e.g., the first external electronic device 810) discovered based on the first communication scheme and at least one extemal electronic device (e.g., the second external electronic device 820) discovered based on the second communication scheme.

According to an embodiment, the processor 120 may determine (or select) a at least one external electronic device to be connected for the service from the at least one extemal electronic device according to the discovery list. According to an embodiment, the processor 120 may determine an extemal electronic device supporting relatively high performance (e.g., the first communication scheme) among the at least one external electronic device in the discovery list as the service target device. According to an embodiment, the processor 120 may determine an extemal electronic device having priority as the service target device, based on a previous connection history (e.g., the number of connections with an external electronic device which has been previously connected) among the at least one extemal electronic device in the discovery list. According to an embodiment, the processor 120 may provide (e.g., display) the discovery list through a display (e.g., the display module 160 of FIG. 1), receive a user input (e.g., a user input of selecting (e.g., touching) an item of an extemal electronic device) based on the displayed discovery list, and determine an extemal electronic device corresponding to an item of an external electronic device selected according to the user input as the service target device.

In operation 911, the processor 120 may perform a connection procedure for a connection with the selected extemal electronic device. According to an embodiment, when the extemal electronic device to be connected is determined, the processor 120 may perform a connection with the determined external electronic device through the communication scheme used for discovery of the external electronic device. According to an embodiment, when the service target device is determined, the processor 120 may operate to perform a direct connection with the corresponding extemal electronic device, based on the communication scheme (or protocol) used for discovery of the service target device.

According to an embodiment, when the determined external electronic device is a first external electronic device supporting the first communication scheme, the processor 120 may perform a connection procedure with the first external electronic device through the first communication scheme used for discovery of the first extemal electronic device. According to an embodiment, when the determined extemal electronic device is a second external electronic device supporting the second communication scheme, the processor 120 may perform a connection procedure with the second extemal electronic device through the second communication scheme used for discovery of the second extemal electronic device. According to an embodiment, a description is given with reference to the drawings below in relation to performing a connection procedure with a corresponding external electronic device based on multiple frequency bands according to a first communication scheme and/or a second communication scheme.

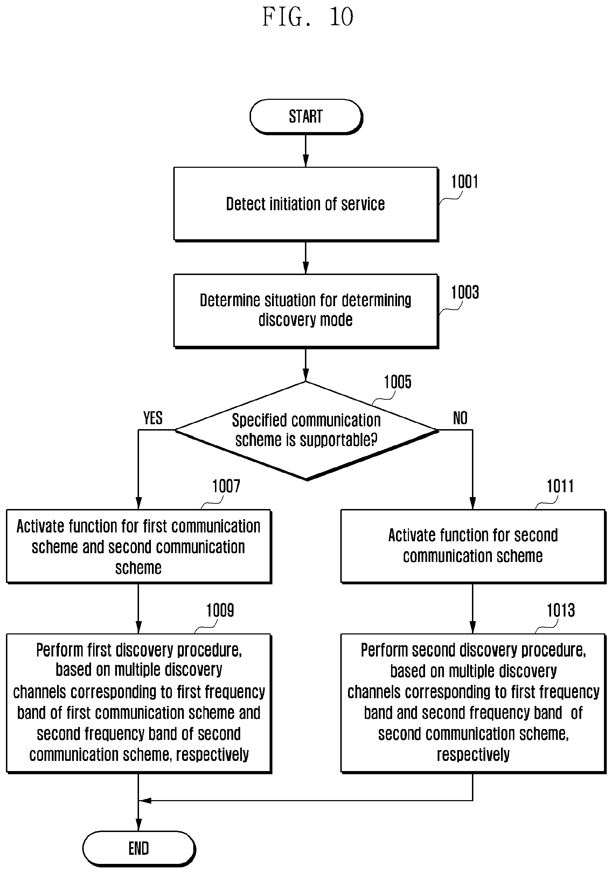

FIG. 10 is a flowchart illustrating an operation method of an electronic device according to an embodiment of the disclosure.

According to an embodiment, FIG. 10 may illustrate an example of supporting device discovery for an external electronic device to be connected to a D2D service based on multiple frequency bands in the electronic device 101 according to an embodiment.

In the electronic device 101 according to an embodiment of the disclosure, a device discovery method based on multiple frequency bands may be performed, for example, according to the flowchart illustrated in FIG. 10. The flowchart illustrated in FIG. 10 is merely a flowchart according to an embodiment of the device discovery method of the electronic device 101, and the order of at least some operations may be changed, performed in parallel, or performed as independent operations, or at least some other operations may be performed complementarily to the at least some operations. According to an embodiment of the disclosure, operations 1001 to 1013 may be performed in at least one processor 120 of the electronic device 101.

According to an embodiment, the operations described in FIG. 10 may be performed heuristically, for example, in combination with the operations described in FIGS. 2 to 9, or may be performed heuristically as detailed operations of at least some of the described operations.

As illustrated in FIG. 10, an operation method (e.g., an operation method for supporting device discovery based on multiple frequency bands) performed by the electronic device 101 according to an embodiment may include an operation of detecting initiation of a service (1001), an operation of determining a situation for determining a discovery mode (1003), an operation of determining whether a specified communication scheme is supportable, based on the determination of the situation (1005), an operation of activating a function (or an interface) for a first communication scheme and a second communication scheme, based on determining that the specified communication scheme is supported (1007), an operation of performing a first discovery procedure, based on multiple discovery channels corresponding to a first frequency band of the first communication scheme and a second frequency band of the second communication scheme, respectively (1009), an operation of activating a function (or an interface) for the second communication scheme, based on determining that the specified communication scheme is not supported (1011), and an operation of performing a second discovery procedure, based on multiple discovery channels corresponding to a third frequency band and a fourth frequency band of the second communication scheme, respectively (1013).

Referring to FIG. 10, in operation 1001, the processor 120 of the electronic device 101 may perform an operation of detecting initiation of a service. According to an embodiment, the electronic device 101 may receive, from a user, a user input (e.g., a request to execute an application capable of performing a service by using short-range wireless communication) for initiating a D2D service, based on a connection with an extemal electronic device. According to an embodiment, the electronic device 101 may determine initiation of the service, based on receiving the user input.

In operation 1003, the processor 120 may perform an operation for determining a situation for determining a discovery mode. According to an embodiment, the processor 120 may determine a situation such as a service characteristic (e.g., an attribute or capability) of a service requested to be executed, an operation state of the first communication circuit 710, and/or a preferred connection scheme used for the service with the external electronic device. According to an embodiment, the processor 120 may determine a discovery mode (e.g., a discovery mode based on a first discovery procedure or a second discovery procedure), at least based on the determined situation.

In operation 1005, the processor 120 may perform an operation of determining whether a specified communication scheme (e.g., a first communication scheme) is supportable, based on the determination of the situation. According to an embodiment, the processor 120 may determine whether support through the first communication scheme (or a first protocol) is possible for the service. According to an embodiment, the processor 120 may determine whether the service supports the specified communication scheme (e.g., the first communication scheme), based on the service characteristic of the service requested to be executed.

In an embodiment, the processor 120 may also determine whether the specified communication scheme is available, based on whether a communication scheme currently being used is activated, based on the first communication circuit 710. For example, the processor 120 may assign priority to a second communication scheme for the service connection when the second communication scheme is being used by the first communication circuit 710, and may determine that the specified communication scheme is not supportable.

In operation 1007, the processor 120 may perform an operation of activating a function for the first communication scheme and the second communication scheme, based on determining in operation 1005 that the specified communication scheme (e.g., the first protocol) is supported (e.g., "Yes" in operation 1005). According to an embodiment, the processor 120 may activate an interface for the first communication scheme (or the first protocol) and the second communication scheme (or a second protocol) through the first communication circuit 710 (e.g., the first communication circuit 710 of FIG. 7). For example, the processor 120 may control the first communication circuit 710 to activate short-range wireless communication based on NAN. For example, the processor 120 may control the first communication circuit 710 to activate short-range wireless communication based on Wi-Fi Direct. According to an embodiment, the processor 120 may control activation of the first core 720 and the second core 730 of the first communication circuit 710 to perform device discovery, based on multiple discovery channels for multiple frequency bands according to the first communication scheme and the second communication scheme.

In operation 1009, the processor 120 may perform an operation of performing a first discovery procedure based on multiple discovery channels corresponding to a first frequency band of the first communication scheme and a second frequency band of the second communication scheme, respectively. According to an embodiment, the processor 120 may discover at least one first extemal electronic device having determined (or configured) a discovery mode by using the first communication scheme, based on the first communication scheme. For example, the processor 120 may operate to discover the first extemal electronic device, based on the first protocol in a first discovery channel of the first frequency band, based on discovery configuration. According to an embodiment, the processor 120 may discover at least one second extemal electronic device having determined a discovery mode by using the second communication scheme, based on the second communication scheme. For example, the processor 120 may operate to discover the second external electronic device, based on the second protocol in a second discovery channel of the second frequency band, based on discovery configuration. The first discovery procedure according to an embodiment is described with reference to the drawings described below.

In operation 1011, the processor 120 may perform an operation of activating a function for the second communication scheme, based on determining in operation 1005 that the specified communication scheme (e.g., the first protocol) is not supported (e.g., "No" in operation 1005). According to an embodiment, the processor 120 may activate an interface for the second communication scheme (or the second protocol) through the first communication circuit 710 (e.g., the first communication circuit 710 of FIG. 7). For example, the processor 120 may control the first communication circuit 710 to activate short-range wireless communication based on Wi-Fi Direct. According to an embodiment, the processor 120 may control activation of the first core 720 and the second core 730 of the first communication circuit 710 to perform device discovery, based on multiple discovery channels for multiple frequency bands according to the second communication scheme.

In operation 1013, the processor 120 may perform an operation of performing a second discovery procedure based on multiple discovery channels respectively corresponding to dual frequency bands (e.g., a third frequency band and a fourth frequency band) of the second communication scheme. According to an embodiment, the processor 120 may discover at least one external electronic device having determined (or configured) a discovery mode by using the second communication scheme, based on the second communication scheme. For example, the processor 120 may operate to discover the first extemal electronic device, based on the second protocol in a third discovery channel of the third frequency band of the second communication scheme, based on discovery configuration. For example, the processor 120 may operate to discover the second external electronic device, based on the second protocol in a fourth discovery channel of the fourth frequency band of the second communication scheme, based on discovery configuration. The second discovery procedure according to an embodiment is described with reference to the drawings described below.

The electronic device 101 according to an embodiment of the disclosure may support Wi-Fi P2P-based device discovery in device discovery. According to an embodiment, the electronic device 101 can improve discovery speed according to the device discovery by simultaneously using multiple frequency bands. According to an embodiment, the electronic device 101 may perform the device discovery by simultaneously activating NAN technology and Wi-Fi Direct technology, which are heterogeneous Wi-Fi P2P technologies, in different frequency bands. According to an embodiment, the electronic device 101 can improve the discovery speed by being configured to utilize all the multiple frequency bands even when performing extemal electronic device discovery based on Wi-Fi Direct.

According to an embodiment, the electronic device 101 may simultaneously support different frequency bands without performance degradation, such as dual Wi-Fi (e.g., RSDB or DBS). According to an embodiment, the electronic device 101 may discover extemal electronic devices by utilizing both the NAN technology and the Wi-Fi Direct technology. According to an embodiment, the electronic device 101 may simultaneously discover external electronic devices supporting corresponding protocols based on respective protocols by simultaneously utilizing the NAN technology and the Wi-Fi Direct technology.

According to an embodiment, the electronic device 101 may configure the first frequency band (e.g., about 5 GHz band) and the first discovery channel in the first frequency band for discovery based on the first protocol. According to an embodiment, the electronic device 101 may configure the second frequency band (e.g., about 2.4 GHz band) and the second discovery channel in the second frequency band for discovery based on the second protocol. According to an embodiment, the electronic device 101 may be synchronized to discover an extemal electronic device in different frequency bands according to a situation in two P2P protocols (e.g., the first protocol and the second protocol). For example, the electronic device 101 can prevent conflict between two protocols by using different frequency bands in heterogeneous protocols, and can improve discovery speed by independently performing discovery for each protocol.

According to an embodiment, the electronic device 101 may configure the third frequency band (e.g., a frequency band identical to or different from the first frequency band) and the third discovery channel (e.g., a discovery channel identical to or different from the first discovery channel) in the third frequency band for discovery based on the second protocol. According to an embodiment, the electronic device 101 may configure the fourth frequency band (e.g., a frequency band identical to or different from the second frequency band) and the fourth discovery channel (e.g., a discovery channel identical to or different from the second discovery channel) in the fourth frequency band for discovery based on the second protocol. According to an embodiment, the electronic device 101 may be synchronized to discover an extemal electronic device in different frequency bands according to a situation in one P2P protocol (e.g., the second protocol). For example, the electronic device 101 may use different frequency bands in a homogeneous protocol to independently perform discovery for each frequency band, so as to improve discovery speed.

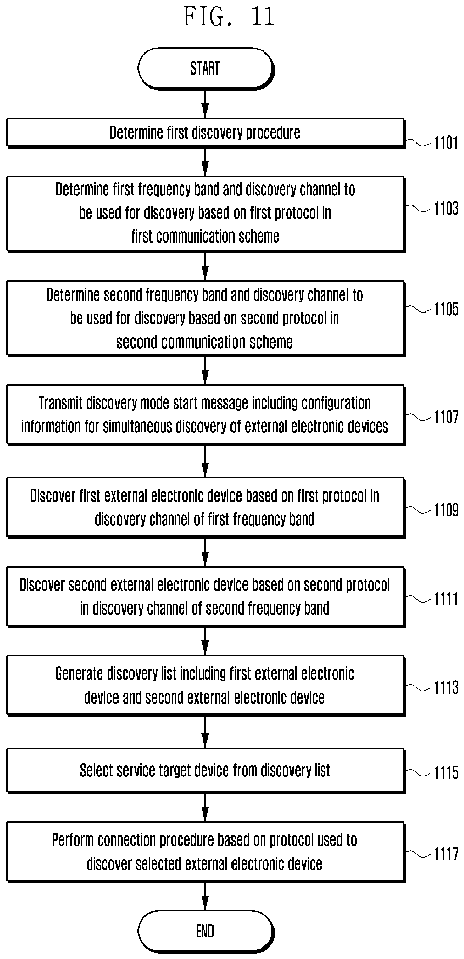

FIG. 11 is a flowchart illustrating an operation method of an electronic device according to an embodiment of the disclosure.

According to an embodiment, FIG. 11 may illustrate an example of supporting device discovery and connection of an external electronic device for a D2D service based on a first discovery procedure in the electronic device 101 according to an embodiment.

In the electronic device 101 according to an embodiment of the disclosure, a device discovery method based on multiple frequency bands may be performed, for example, according to the flowchart illustrated in FIG. 11. The flowchart illustrated in FIG. 11 is merely a flowchart according to an embodiment of the device discovery method of the electronic device 101, and the order of at least some operations may be changed, performed in parallel, or performed as independent operations, or at least some other operations may be performed complementarily to the at least some operations. According to an embodiment of the disclosure, operations 1101 to 1117 may be performed in at least one processor 120 of the electronic device 101.

According to an embodiment, the operations described in FIG. 11 may be performed heuristically, for example, in combination with the operations described in FIGS. 2 to 10, or may be performed heuristically as detailed operations of at least some of the described operations.

As illustrated in FIG. 11, an operation method (e.g., an operation method according to a first discovery procedure for supporting device discovery based on multiple discovery channels for multiple frequency bands) performed by the electronic device 101 according to an embodiment may include an operation of determining a first discovery procedure (1101), an operation of determining a first frequency band and a first discovery channel to be used for discovery based on a first communication scheme (1103), an operation of determining a second frequency band and a second discovery channel to be used for discovery based on a second communication scheme (1105), an operation of transmitting a discovery mode start message including configuration information for simultaneous discovery of external electronic devices (1107), an operation of discovering a first external electronic device based on a first protocol in the first discovery channel of the first frequency band

(1109), an operation of discovering a second external electronic device based on a second protocol in the second discovery channel of the second frequency band (1111), an operation of generating a discovery list including the first external electronic device and the second external electronic device (1113), an operation of selecting a service target device from the discovery list (1115), and an operation of performing a connection procedure based on the protocol used to discover the selected external electronic device (1117).

Referring to FIG. 11, in operation 1101, the processor 120 of the electronic device 101 may determine a first discovery procedure. According to an embodiment, the processor 120 may determine the first discovery procedure, based on the operation described in the description part referring to FIG. 10 described above.

In operation 1103, the processor 120 may perform an operation of determining a first frequency band and a first discovery channel to be used for discovery based on a first communication scheme. According to an embodiment, the processor 120 may determine a frequency band and a discovery channel in which NAN technology, which is a first protocol, is to be used when a D2D service is requested.

In operation 1105, the processor 120 may perform an operation of determining a second frequency band and a second discovery channel to be used for discovery based on a second communication scheme. According to an embodiment, the processor 120 may determine a frequency band and a discovery channel in which Wi-Fi Direct technology, which is a second protocol, is to be used when a D2D service is requested.

According to an embodiment, operations 1103 and 1105 are not limited to the illustrated order and may be performed in parallel, substantially simultaneously, or heuristically. According to an embodiment, a description is made with reference to the drawings described below in relation to determining (or configuring) multiple frequency bands based on NAN and Wi-Fi Direct.

In operation 1107, the processor 120 may perform an operation of transmitting a discovery mode start message including configuration information for simultaneous discovery of external electronic devices. In an embodiment, the processor 120 may broadcast the discovery mode start message including the configuration information through OOB by using the second communication circuit 740 (e.g., the second communication circuit 740 of FIG. 7).

In operation 1109, the processor 120 may perform an operation of discovering a first external electronic device, based on the first protocol in the first discovery channel of the first frequency band.

In operation 1111, the processor 120 may perform an operation of discovering a second external electronic device, based on the second protocol in the second discovery channel of the second frequency band.

According to an embodiment, operations 1109 and 1111 are not limited to the illustrated order and may be performed in parallel, substantially simultaneously, or heuristically. According to an embodiment, the following is described in relation to an operation of discovering external electronic devices in multiple discovery channels of multiple frequency bands by using the NAN technology which is the first protocol, and the Wi-Fi Direct technology which is the second protocol.

In operation 1113, the processor 120 may perform an operation of generating a discovery list including the first external electronic device and the second external electronic device.

In operation 1115, the processor 120 may perform an operation of selecting a service target device from the discovery list. According to an embodiment, the processor 120 may determine (or select) an external electronic device to be connected from among at least one external electronic device included in the discovery list. According to an embodiment, the processor 120 may determine an external electronic device supporting relatively high performance (e.g., the first communication scheme) among the at least one external electronic device in the discovery list as the service target device. According to an embodiment, the processor 120 may determine an external electronic device having priority as the service target device, based on a previous connection history (e.g., the number of connections with an external electronic device which has been previously connected) among the at least one external electronic device in the discovery list. According to an embodiment, the processor 120 may provide (e.g., display) the discovery list through a display (e.g., the display module 160 of FIG. 1), receive a user input (e.g., a user input of selecting (e.g., touching) an item of an external electronic device) based on the displayed discovery list, and determine an external electronic device corresponding to an item of an external electronic device selected according to the user input as the service target device.

In operation 1117, the processor 120 may perform a connection procedure based on the protocol used to discover the selected external electronic device.

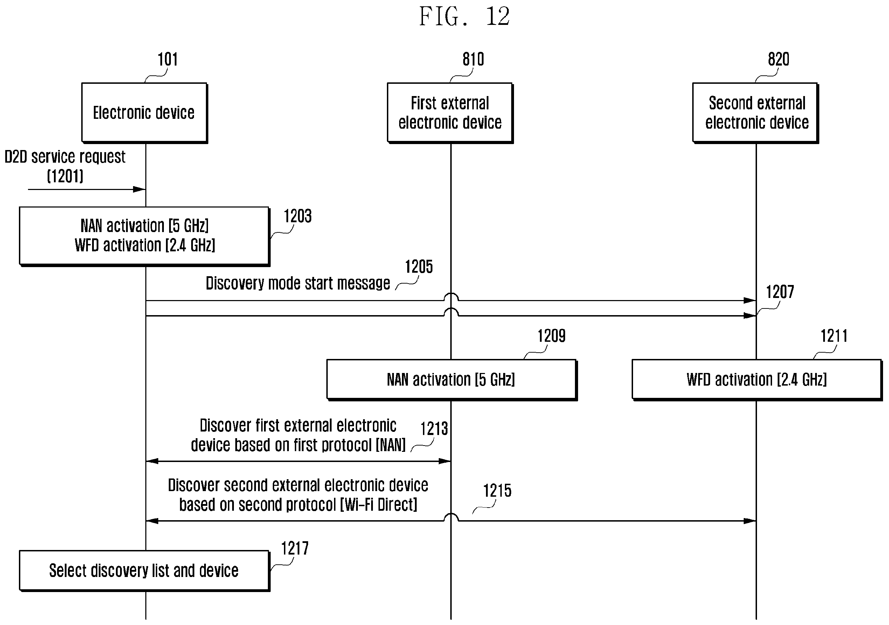

FIG. 12 is a diagram illustrating an example in which electronic devices operate based on a first discovery procedure according to an embodiment of the disclosure.

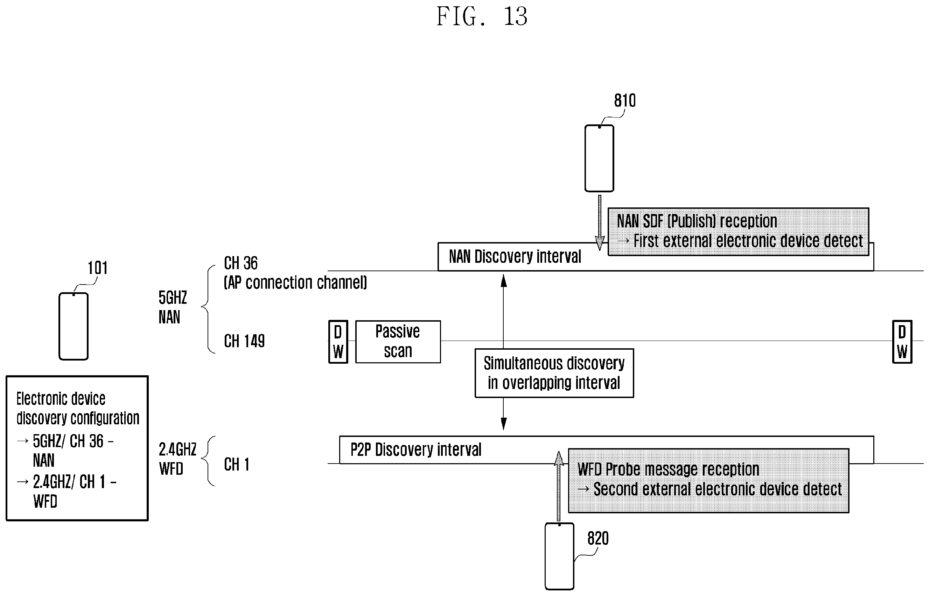

FIG. 13 is a diagram illustrating an example in which electronic devices operate based on a first discovery procedure according to an embodiment of the disclosure.

According to an embodiment, FIGS. 12 and 13 may illustrate an example of a Wi-Fi P2P discovery method performed based on a first discovery procedure between electronic devices according to an embodiment. For example, FIGS. 12 and 13 may illustrate an example of an operation in which the electronic device 101 simultaneously discovers external electronic devices supporting multiple protocols by simultaneously using multiple frequency bands according to an embodiment. According to an embodiment, FIGS. 12 and 13 may illustrate an example of an operation in which the electronic device 101 simultaneously performs NAN discovery and Wi-Fi Direct discovery by using multiple frequency bands based on heterogeneous protocols.

Referring to FIG. 12, in operation 1201, the electronic device 101 may initiate a service in response to a D2D service request. For example, the electronic device 101 may start various Wi-Fi P2P-based service scenarios. The electronic device 101 and an external electronic device (e.g., the first external electronic device 810 and the second external electronic device 820) according to an embodiment may perform a Wi-Fi P2P connection and perform data communication through Wi-Fi P2P discovery between each other. For example, a service may be initiated based on a service request in various application fields such as a device-to-device content transmission service, a device-to-device continuity service, or a device-to-device screen sharing service.

In operation 1203, the electronic device 101 may activate an interface for supporting a first communication scheme (e.g., short-range wireless communication based on NAN) and an interface for supporting a second communication scheme (e.g., short-range wireless communication based on Wi-Fi Direct). According to an embodiment, when a D2D service is requested, the electronic device 101 may determine a frequency band and a discovery channel in which NAN technology, which is a first protocol, is to be used, and determine a frequency band and a discovery channel in which Wi-Fi Direct technology, which is a second protocol, is to be used. According to an embodiment, the electronic device 101 may simultaneously support different frequency bands such as dual Wi-Fi (e.g., RSDB or DBS). According to an embodiment, the electronic device 101 may be used to discover external electronic devices in different frequency bands based on the NAN technology and the Wi-Fi Direct technology. According to an embodiment, the electronic device 101 may simultaneously discover external electronic devices supporting protocols corresponding to the NAN technology and the Wi-Fi Direct technology by simultaneously utilizing both the technologies.

According to an embodiment, the electronic device 101 may configure a first frequency band (e.g., about 5 GHz band) and a first discovery channel in the first frequency band for discovery based on the first protocol. According to an embodiment, the electronic device 101 may configure a second frequency band (e.g., about 2.4 GHz band) and a second discovery channel in the second frequency band for discovery based on the second protocol. According to an embodiment, the electronic device 101 may be synchronized to discover the external electronic devices 810 and 820 in different frequency bands according to a situation in two P2P protocols (e.g., the first protocol and the second protocol). For example, the electronic device 101 can prevent conflict between two protocols by using different frequency bands in heterogeneous protocols, and can improve discovery speed by independently performing discovery for each protocol.

In operations 1205 and 1207, the electronic device 101 may include discovery configuration information of the two P2P protocols (e.g., the first protocol and the second protocol) determined by the electronic device 101 in a discovery mode start message to broadcast the message to the external electronic devices 810 and 820 through OOB such as BLE.

According to an embodiment, the first external electronic device 810 may receive the discovery mode start message including the configuration information from the electronic device 101 through the OOB. According to an embodiment, the first external electronic device 810 may determine a communication scheme which is supportable by the first external electronic device 810, based on the configuration information of the discovery mode start message. In an embodiment, the first external electronic device 810 may be a device capable of supporting both the first communication scheme (e.g., short-range wireless communication based on NAN) and the second communication scheme (e.g., short-range wireless communication based on Wi-Fi Direct).

According to an embodiment, in operation 1209, the first external electronic device 810 may activate the interface for the first communication scheme (e.g., short-range wireless communication based on NAN). For example, the first external electronic device 810 may determine the first frequency band (e.g., about 5 GHz band) in which the NAN technology, which is the first protocol, is to be used. According to an embodiment, FIG. 12 may illustrate an example in which the first external electronic device 810 determines to utilize the NAN technology. According to an embodiment, the first external electronic device 810 may determine a higher-performance NAN technology, and may also determine the Wi-Fi Direct technology depending on a state of the first external electronic device 810. For example, the first external electronic device 810 may determine discovery and connection based on Wi-Fi Direct when Wi-Fi Direct is already being used.

According to an embodiment, in the examples of FIG. 12 and FIG. 13, the electronic device 101 and the first external electronic device 810 may activate an interface for short-range wireless communication based on NAN by using the first frequency band (e.g., about 5 GHz band) as configured by the electronic device 101.

According to an embodiment, the second external electronic device 820 may receive the discovery mode start message including the configuration information from the electronic device 101 through the OOB. According to an embodiment, the second external electronic device 820 may determine a communication scheme which is supportable by the second external electronic device 820, based on the configuration information of the discovery mode start message. In an embodiment, the second external electronic device 820 may be a device which does not support the first communication scheme and is capable of supporting the second communication scheme, or a device which is capable of supporting both the first communication scheme and the second communication scheme but has priority applied to the second communication scheme.

According to an embodiment, in operation 1211, the second external electronic device 820 may activate the interface for the second communication scheme (e.g., short-range wireless communication based on Wi-Fi Direct). For example, the second external electronic device 820 may determine the second frequency band (e.g., about 2.4 GHz band) in which the Wi-Fi Direct technology, which is the second protocol, is to be used.

In operation 1213, the electronic device 101 may discover the first external electronic device 810 in the first discovery channel of the first frequency band, based on the first protocol. According to an embodiment, the electronic device 101 may exchange an SDF with the first external electronic device 810, based on the first frequency band (e.g., about 5 GHz band).

According to an embodiment, FIG. 13 may illustrate an example in which the electronic device 101 determines the first frequency band (e.g., about 5 GHz band) as a utilization frequency band of the first protocol (e.g., NAN technology) and determines the second frequency band (e.g., about 2.4 GHz band) as a utilization frequency band of the second protocol (e.g., Wi-Fi Direct technology). The disclosure is not limited thereto, and the second frequency band (e.g., about 2.4 GHz band) may be utilized as the utilization frequency band of the first protocol, and the first frequency band (e.g., about 5 GHz band) may be utilized as the utilization frequency band of the second protocol.

According to an embodiment, as illustrated in FIG. 13, when the first protocol is utilized in the first frequency band (e.g., about 5 GHz band), the electronic device 101 may not use an NAN DW which basically operates on channel No. 6 of the second frequency band (e.g., about 2.4 GHz band). According to an embodiment, the electronic device 101 may operate to synchronize with the external electronic devices 810 and 820 by utilizing channel No. 149, which is a social channel of the first frequency band (e.g., about 5 GHz band).

According to an embodiment, the electronic device 101 may utilize a DW on channel No. 149 and utilize an interval between DWs to quickly exchange an SDF and perform discovery. According to an embodiment, a method of utilizing an interval between DWs for discovery may utilize an instant mode or an unsynchronous discovery mode defined in the standard.

According to an embodiment, the electronic device 101 may transmit channel information regarding a discovery channel for performing discovery by utilizing the interval between the DWs to the external electronic devices 810 and 820 through the discovery mode start message. According to an embodiment, in FIG. 13, channel No. 36, which is a different channel from channel No. 149, may be assumed. In an embodiment, channel No. 36 may be, for example, a channel through which the electronic device 101 is connected to an access point (AP). For example, when the electronic device 101 is connected to the access point (AP), channel information (e.g., channel No. 36) connected to the access point (AP) may be utilized to minimize channel movement and maximize discovery speed, and FIG. 13 may illustrate an example of this. According to an embodiment, the electronic device 101 may also continuously utilize channel No. 149, which is a DW channel, as a discovery channel.

According to an embodiment, the electronic device 101 may activate an interface (e.g., the first core 720) for the first protocol (e.g., NAN technology) in the first frequency band (e.g., about 5 GHz band) and periodically perform a passive scan operation on channel No. 149 for NAN cluster synchronization.

According to an embodiment, although not illustrated in FIG. 13, the first external electronic device 810 may also perform a passive scan operation for NAN synchronization when performing discovery by utilizing the first frequency band based on the first protocol.

According to an embodiment, the first external electronic device 810 may transmit an SDF publish message by using an interval (e.g., an NAN discovery interval) between DWs in a discovery channel (e.g., channel No. 36) of the first frequency band (e.g., about 5 GHz band). According to an embodiment, the electronic device 101 may receive a command message from the first external electronic device 810, obtain information (e.g., a protocol determined by the first external electronic device 810) on the first external electronic device 810, and perform discovery with the first external electronic device 810 based on the first protocol.

According to an embodiment, although not illustrated in FIG. 13, a discovery method in which the electronic device 101 first transmits an SDF subscribe message and the first external electronic device 810 responds with an SDF publish message in response thereto is also possible.

In operation 1215, the electronic device 101 may discover the second external electronic device 820 in the second discovery channel of the second frequency band, based on the second protocol. According to an embodiment, the electronic device 101 may exchange a probe message with the second external electronic device 820 based on the second frequency band (e.g., about 2.4 GHz band).

According to an embodiment, referring to FIG. 13, the electronic device 101 may determine a frequency band for the second protocol (e.g., Wi-Fi Direct technology) in the second frequency band (e.g., about 2.4 GHz band) different from the first frequency band (e.g., about 5 GHz band), and determine channel No. 1 of the second frequency band as a discovery channel.

According to an embodiment, the second external electronic device 820 may perform a Wi-Fi Direct discovery operation by using a discovery channel (e.g., channel No. 1) of the second frequency band (e.g., about 2.4 GHz band). According to an embodiment, the electronic device 101 may perform discovery for the second external electronic device 820 on channel No. 1 of the second frequency band (e.g., about 2.4 GHz band) substantially simultaneously with transmission of the discovery mode start message through the OOB. For example, the electronic device 101 may maintain a listen mode for receiving a discovery message of the second external electronic device 820 on channel No. 1 of the second frequency band. According to an embodiment, the electronic device 101 may receive a probe request message or a probe response message transmitted by the second external electronic device 820 through channel No. 1 of the second frequency band and complete the discovery.

According to an embodiment, the electronic device 101 may perform NAN discovery and Wi-Fi Direct discovery simultaneously in heterogeneous frequency bands (e.g., about 5 GHz band and about 2.4 GHz band) as described above. For example, the electronic device 101 may perform simultaneous discovery in the same time interval (e.g., an overlapping interval). According to an embodiment, the electronic device 101 can improve discovery speed while preventing conflict caused by the same frequency band by simultaneously performing NAN discovery and Wi-Fi Direct discovery in different frequency bands within the same time interval.

In operation 1217, the electronic device 101 may generate a discovery list including the first external electronic device 810 and the second external electronic device 820, and select one external electronic device based on a specified condition. According to an embodiment, the electronic device 101 may perform a connection procedure based on the determined protocol with the selected external electronic device.

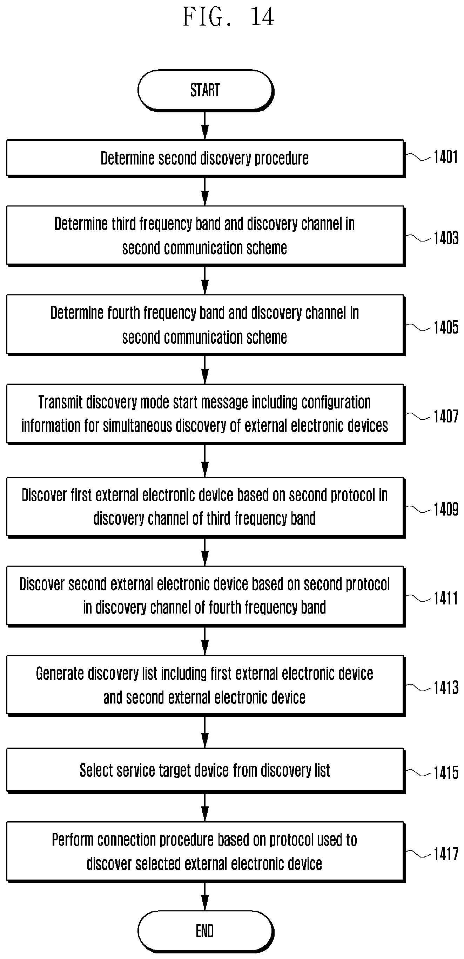

FIG. 14 is a flowchart illustrating an operation method of an electronic device according to an embodiment of the disclosure.

According to an embodiment, FIG. 14 may illustrate an example of supporting device discovery and connection of an external electronic device for a D2D service based on a second discovery procedure in the electronic device 101 according to an embodiment.

In the electronic device 101 according to an embodiment of the disclosure, a device discovery method based on multiple frequency bands may be performed, for example, according to the flowchart illustrated in FIG. 14. The flowchart illustrated in FIG. 14 is merely a flowchart according to an embodiment of the device discovery method of the electronic device 101, and the order of at least some operations may be changed, performed in parallel, or performed as independent operations, or at least some other operations may be performed complementarily to the at least some operations. According to an embodiment of the disclosure, operations 1401 to 1417 may be performed in at least one processor 120 of the electronic device 101.

According to an embodiment, the operations described in FIG. 14 may be performed heuristically, for example, in combination with the operations described in FIGS. 2 to 13, or may be performed heuristically as detailed operations of at least some of the described operations.

As illustrated in FIG. 14, an operation method (e.g., an operation method according to a second discovery procedure for supporting device discovery based on multiple discovery channels for multiple frequency bands) performed by the electronic device 101 according to an embodiment may include an operation of determining a second discovery procedure (1401), an operation of determining a third frequency band and a third discovery channel to be used for discovery based on a second communication scheme (1403), an operation of determining a fourth frequency band and a fourth discovery channel to be used for discovery based on the second communication scheme (1405), an operation of transmitting a discovery mode start message including configuration information for simultaneous discovery of external electronic devices (1407), an operation of discovering a first external electronic device based on a second protocol in the third discovery channel of the third frequency band (1409), an operation of discovering a second external electronic device based on the second protocol in the fourth discovery channel of the fourth frequency band (1411), an operation of generating a discovery list including the first external electronic device and the second external electronic device (1413), an operation of selecting a service target device from the discovery list (1415), and an operation of performing a connection procedure based on the protocol used to discover the selected external electronic device (1417).

Referring to FIG. 14, in operation 1401, the processor 120 of the electronic device 101 may determine a second discovery procedure. According to an embodiment, the processor 120 may determine the second discovery procedure based on the operation described in the description part referring to FIG. 10 described above.

In operation 1403, the processor 120 may perform an operation of determining a third frequency band and a third discovery channel to be used for discovery based on a second communication scheme. According to an embodiment, the processor 120 may determine a frequency band and a discovery channel in which Wi-Fi Direct technology, which is a second protocol, is to be used when a D2D service is requested.

In operation 1405, the processor 120 may perform an operation of determining a fourth frequency band and a fourth discovery channel to be used for discovery based on the second communication scheme. According to an embodiment, the processor 120 may determine a different frequency band and a different discovery channel in which the Wi-Fi Direct technology, which is the second protocol, is to be used when a D2D service is requested.

According to an embodiment, operations 1403 and 1405 are not limited to the illustrated order and may be performed in parallel, substantially simultaneously, or heuristically. According to an embodiment, a description is made with reference to the drawings described below in relation to determining (or configuring) multiple frequency bands through dual bands based on Wi-Fi Direct.

In operation 1407, the processor 120 may perform an operation of transmitting a discovery mode start message including configuration information for simultaneous discovery of external electronic devices. In an embodiment, the processor 120 may broadcast the discovery mode start message including the configuration information through OOB by using the second communication circuit 740 (e.g., the second communication circuit 740 of FIG. 7).

In operation 1409, the processor 120 may perform an operation of discovering a first external electronic device, based on the second protocol in the third discovery channel of the third frequency band.

In operation 1411, the processor 120 may perform an operation of discovering a second external electronic device, based on the second protocol in the fourth discovery channel of the fourth frequency band.

According to an embodiment, operations 1409 and 1411 are not limited to the illustrated order and may be performed in parallel, substantially simultaneously, or heuristically. According to an embodiment, the following is described in relation to an operation of discovering external electronic devices in multiple discovery channels of multiple frequency bands by using the Wi-Fi Direct technology which is the second protocol.

In operation 1413, the processor 120 may perform an operation of generating a discovery list including the first external electronic device and the second external electronic device.

In operation 1415, the processor 120 may perform an operation of selecting a service target device from the discovery list. According to an embodiment, the processor 120 may determine (or select) an external electronic device to be connected from among at least one external electronic device according to the discovery list based on various conditions specified as in the above-described example.

In operation 1417, the processor 120 may perform a connection procedure based on the protocol used to discover the selected external electronic device.

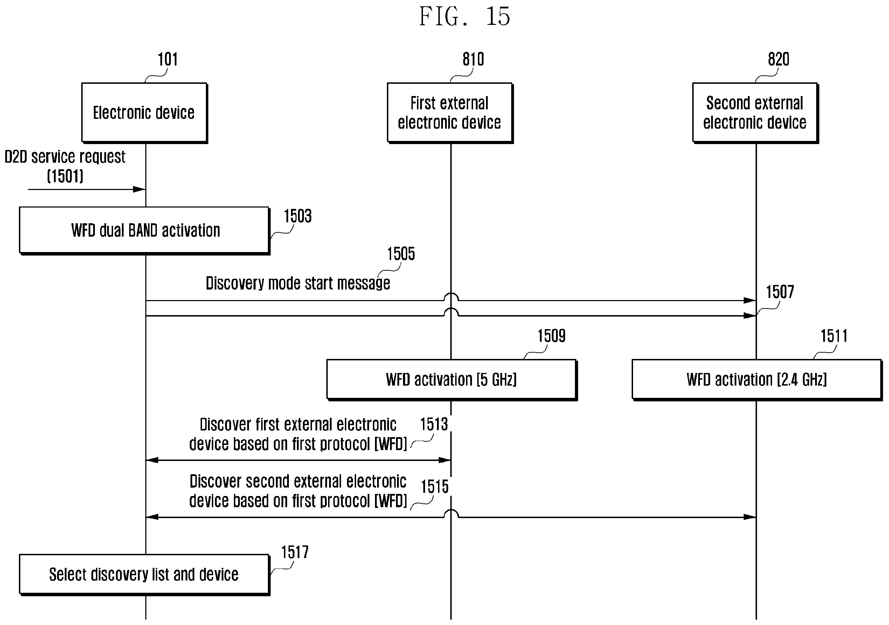

FIG. 15 is a diagram illustrating an example in which electronic devices operate based on a second discovery procedure according to an embodiment of the disclosure.

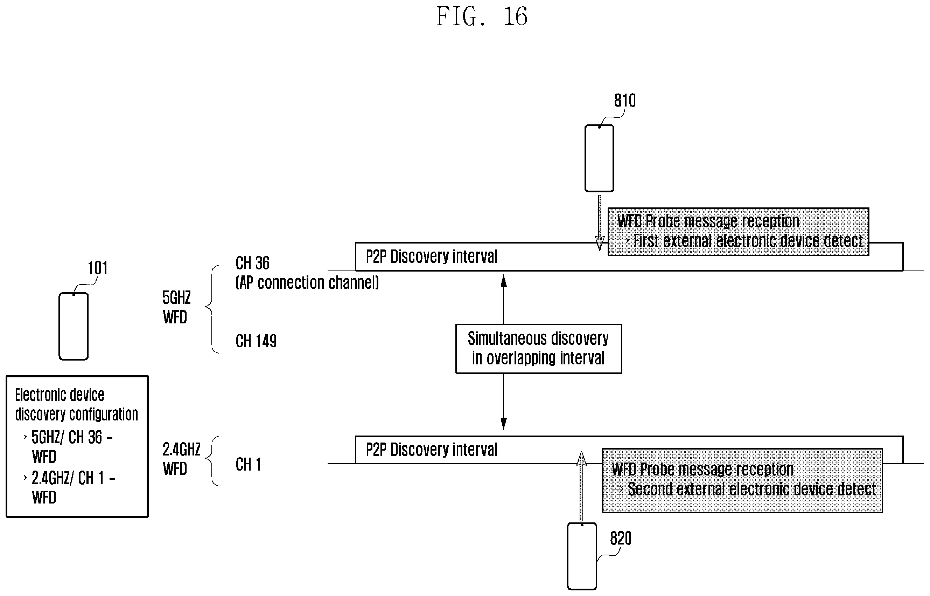

FIG. 16 is a diagram illustrating an example in which electronic devices operate based on a first discovery procedure according to an embodiment of the disclosure.

According to an embodiment, FIGS. 15 and 16 may illustrate an example of a Wi-Fi P2P discovery method performed based on a second discovery procedure between electronic devices according to an embodiment. For example, FIGS. 15 and 16 may illustrate an example of an operation in which the electronic device 101 simultaneously discovers external electronic devices supporting a specified protocol by simultaneously using multiple frequency bands according to an embodiment. According to an embodiment, FIGS. 15 and 16 may illustrate an example of an operation in which the electronic device 101 simultaneously performs multi-discovery based on Wi-Fi Direct by using multiple frequency bands based on a homogeneous protocol.

Referring to FIG. 15, in operation 1501, the electronic device 101 may initiate a service in response to a D2D service request. For example, the electronic device 101 may start various Wi-Fi P2P-based service scenarios. The electronic device 101 and an external electronic device (e.g., the first external electronic device 810 and the second external electronic device 820) according to an embodiment may perform a Wi-Fi P2P connection and perform data communication through Wi-Fi P2P discovery between each other. For example, a service may be initiated based on a service request in various application fields such as a device-to-device content transmission service, a device-to-device continuity service, or a device-to-device screen sharing service.

In operation 1503, the electronic device 101 may activate an interface for a second communication scheme (e.g., short-range wireless communication based on Wi-Fi Direct). According to an embodiment, when a D2D service is requested, the electronic device 101 may determine two frequency bands in which Wi-Fi Direct technology, which is a second protocol, is to be used, and two discovery channels corresponding to the respective frequency bands. According to an embodiment, the electronic device 101 may simultaneously support different frequency bands (e.g., dual bands) such as dual Wi-Fi (e.g., RSDB or DBS). According to an embodiment, the electronic device 101 may be used to discover external electronic devices in different frequency bands based on the Wi-Fi Direct technology. According to an embodiment, the electronic device 101 may simultaneously discover external electronic devices supporting a corresponding protocol by utilizing the Wi-Fi Direct technology.

According to an embodiment, the electronic device 101 may configure a third frequency band (e.g., about 5 GHz band) and a third discovery channel in the third frequency band, and a fourth frequency band (e.g., about 2.4 GHz band) and a fourth discovery channel in the fourth frequency band for simultaneous discovery based on the second protocol. According to an embodiment, the electronic device 101 may be synchronized to discover the external electronic devices 810 and 820 in different frequency bands according to a situation in one P2P protocol (e.g., the second protocol). For example, the electronic device 101 can prevent conflict between protocols by using different frequency bands in a homogeneous protocol, and can improve discovery speed by independently performing discovery in each frequency band.

In operation 1505, the electronic device 101 may include discovery configuration information of a P2P protocol (e.g., the second protocol) determined by the electronic device 101 in a discovery mode start message to broadcast the message to the external electronic devices 810 and 820 through OOB such as BLE.

According to an embodiment, the first external electronic device 810 may receive the discovery mode start message including the configuration information from the electronic device 101 through the OOB. According to an embodiment, the first external electronic device 810 may determine a communication scheme which is supportable by the first external electronic device 810, based on the configuration information of the discovery mode start message. In an embodiment, the first external electronic device 810 may be a device capable of supporting dual bands (e.g., the third frequency band and the fourth frequency band).

According to an embodiment, in operation 1509, the first external electronic device 810 may activate the interface for the second communication scheme (e.g., short-range wireless communication based on Wi-Fi Direct). For example, the first external electronic device 810 may determine the third frequency band (e.g., about 5 GHz band) in which the Wi-Fi Direct technology, which is the second protocol, is to be used. According to an embodiment, FIG. 15 may illustrate an example in which the first external electronic device 810 determines the third frequency band having priority (e.g., a relatively superior performance). According to an embodiment, the first external electronic device 810 may determine a frequency band to be utilized for device discovery in response to a frequency band of a protocol configured by the electronic device 101 based on the configuration information. According to an embodiment, the first external electronic device 810 may also determine the fourth frequency band (e.g., about 2.4 GHz band) based on a state of the first external electronic device 810. For example, the first external electronic device 810 may determine discovery and connection based on the fourth frequency band when the fourth frequency band is already being used in Wi-Fi Direct.

According to an embodiment, in the examples of FIG. 15 and FIG. 16, the electronic device 101 and the first external electronic device 810 may activate the interface for short-range wireless communication based on Wi-Fi Direct by using the third frequency band (e.g., about 5 GHz band) as configured by the electronic device 101.

According to an embodiment, the second external electronic device 820 may receive the discovery mode start message including the configuration information from the electronic device 101 through the OOB. According to an embodiment, the second external electronic device 820 may determine a communication scheme which is supportable by the second external electronic device 820, based on the configuration information of the discovery mode start message. In an embodiment, the second external electronic device 820 may be a device which does not support dual bands and is capable of supporting the fourth frequency band, or a device which is capable of supporting dual bands but has priority applied to the fourth frequency band.

According to an embodiment, in operation 1511, the second external electronic device 820 may activate the interface for the second communication scheme (e.g., short-range wireless communication based on Wi-Fi Direct). For example, the second external electronic device 820 may determine the fourth frequency band (e.g., about 2.4 GHz band) in which the Wi-Fi Direct technology, which is the second protocol, is to be used.

In operation 1513, the electronic device 101 may discover the first external electronic device 810 in the third discovery channel of the third frequency band, based on the second communication scheme. According to an embodiment, the electronic device 101 may exchange a probe message with the first external electronic device 810, based on the third frequency band (e.g., about 5 GHz band).

In operation 1515, the electronic device 101 may discover the second external electronic device 820 in the fourth discovery channel of the fourth frequency band, based on the second communication scheme. According to an embodiment, the electronic device 101 may exchange a probe message with the second external electronic device 820, based on the fourth frequency band (e.g., about 2.4 GHz band).

According to an embodiment, FIG. 16 may illustrate an example in which the electronic device 101 determines the third frequency band (e.g., about 5 GHz band) and the fourth frequency band (e.g., about 2.4 GHz band) as utilization frequency bands of the second protocol (e.g., Wi-Fi Direct technology). According to an embodiment, the electronic device 101 may configure Wi-Fi Direct, which is the second protocol, to both of the dual bands (or dual frequency bands) and determine each channel to be utilized for discovery in each frequency band. According to an embodiment, a discovery channel for each frequency band may be a predetermined channel which has been already defined, and may be determined by referring to a connection channel with an access point (AP) to which the electronic device 101 is currently connected.

According to an embodiment, in the example of FIG. 16, assuming that the electronic device 101 is connected to the access point (AP) on channel No. 36, channel No. 36 is configured for the third frequency band (e.g., about 5 GHz band), channel No. 1 is configured for the fourth frequency band (e.g., about 2.4 GHz band), and the discovery mode start message is then transmitted to the external electronic devices 810 and 820. According to an embodiment, although not illustrated, the electronic device 101 may operate to be synchronized by using channel No. 149, which is a social channel of the third frequency band (e.g., about 5 GHz band).

According to an embodiment, the external electronic devices 810 and 820 having received the discovery mode start message may determine a frequency band to participate in discovery by considering the capability of the external electronic devices. For example, an external electronic device which supports the third frequency band (e.g., about 5 GHz band) may basically determine the third frequency band as a discovery frequency band. For example, an external electronic device which supports only the fourth frequency band (e.g., about 2.4 GHz band) may determine the fourth frequency band as the discovery frequency band. According to an embodiment, even when the external electronic devices 810 and 820 support the third frequency band (e.g., about 5 GHz band), the external electronic devices 810 and 820 may determine to participate in the fourth frequency band when P2P communication is already taking place in the fourth frequency band (e.g., about 2.4 GHz band).

According to an embodiment, the external electronic devices 810 and 820 having selected each frequency band may perform a specified discovery operation, for example, transmitting a probe message, in a specified discovery channel. According to an embodiment, the electronic device 101 may determine a frequency band for the second protocol (e.g., Wi-Fi Direct technology) in the third frequency band (e.g., about 5 GHz band) and the fourth frequency band (e.g., about 2.4 GHz band) different from the third frequency band, and may determine channel No. 36 of the third frequency band and channel No. 1 of the fourth frequency band as discovery channels, respectively.

According to an embodiment, the electronic device 101 may perform a Wi-Fi Direct discovery operation by using a discovery channel (e.g., channel No. 36) of the third frequency band (e.g., about 5 GHz band). According to an embodiment, the electronic device 101 may perform discovery for the first external electronic device 810 on channel No. 36 of the third frequency band (e.g., about 5 GHz band) substantially simultaneously with transmission of the discovery mode start message through the OOB. For example, the electronic device 101 may maintain a listen mode for receiving a discovery message of the first external electronic device 810 on channel No. 36 of the third frequency band. According to an embodiment, the electronic device 101 may receive a probe request message or a probe response message transmitted by the first external electronic device 810 through channel No. 36 of the third frequency band and complete the discovery.

According to an embodiment, the electronic device 101 may perform a Wi-Fi Direct discovery operation by using a discovery channel (e.g., channel No. 1) of the fourth frequency band (e.g., about 2.4 GHz band). According to an embodiment, the electronic device 101 may perform discovery for the second external electronic device 820 on channel No. 1 of the fourth frequency band (e.g., about 2.4 GHz band) substantially simultaneously with transmission of the discovery mode start message through the OOB. For example, the electronic device 101 may maintain a listen mode for receiving a discovery message of the second external electronic device 820 on channel No. 1 of the fourth frequency band. According to an embodiment, the electronic device 101 may receive a probe request message or a probe response message transmitted by the second external electronic device 820 through channel No. 1 of the fourth frequency band and complete the discovery.

According to an embodiment, the electronic device 101 may receive probe messages transmitted by the external electronic devices 810 and 820 simultaneously on a discovery channel of each frequency band while existing in the same time interval on the discovery channel of each frequency band configured by the electronic device 101, and complete the discovery.

According to an embodiment, the electronic device 101 may perform Wi-Fi Direct discovery simultaneously in heterogeneous frequency bands (e.g., about 5 GHz band and about 2.4 GHz band) as described above. For example, the electronic device 101 may perform simultaneous discovery in the same time interval (e.g., an overlapping interval). According to an embodiment, the electronic device 101 can improve discovery speed while preventing conflict caused by the same frequency band by simultaneously performing Wi-Fi Direct discovery in different frequency bands within the same time interval.

In operation 1517, the electronic device 101 may generate a discovery list including the first external electronic device 810 and the second external electronic device 820, and select one external electronic device based on a specified condition. According to an embodiment, the electronic device 101 may perform a connection procedure based on the determined protocol with the selected external electronic device. According to an embodiment, when a connection with at least one external electronic device among external electronic devices discovered in each frequency band is determined, the electronic device 101 may directly establish an autonomous GO in the currently discovered frequency band or on a channel of the frequency band to complete the connection.

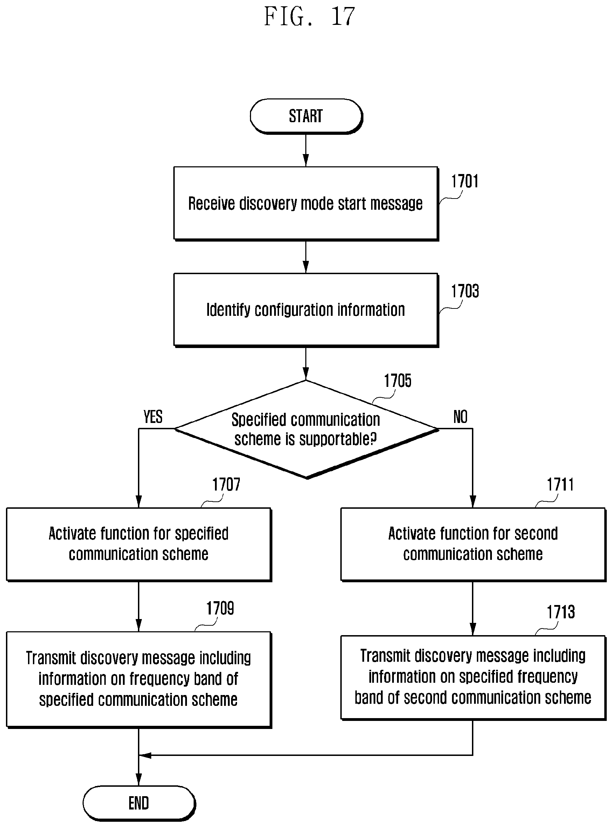

FIG. 17 is a flowchart illustrating an operation method of an electronic device according to an embodiment of the disclosure.

According to an embodiment, FIG. 17 may illustrate an example of supporting device discovery and connection based on a first communication scheme or a second communication scheme when the electronic device 101 according to an embodiment operates as an electronic device (e.g., an external electronic device) on a reception side.

In the electronic device 101 according to an embodiment of the disclosure, a device discovery method based on multiple frequency bands may be performed, for example, according to the flowchart illustrated in FIG. 17. The flowchart illustrated in FIG. 17 is merely a flowchart according to an embodiment of the device discovery method of the electronic device 101, and the order of at least some operations may be changed, performed in parallel, or performed as independent operations, or at least some other operations may be performed complementarily to the at least some operations. According to an embodiment of the disclosure, operations 1701 to 1713 may be performed in at least one processor 120 of the electronic device 101.

According to an embodiment, the operations described in FIG. 17 may be performed heuristically, for example, in combination with the operations described in FIGS. 2 to 16, or may be performed heuristically as detailed operations of at least some of the described operations.

As illustrated in FIG. 17, an operation method (e.g., an operation method for supporting device discovery based on multiple frequency bands) performed by the electronic device 101 according to an embodiment may include an operation of detecting reception of a discovery mode start message (1701), an operation of identifying configuration information (1703), an operation of determining whether a specified communication scheme is supportable, based on the configuration information (1705), an operation of activating a function (or interface) for the specified communication scheme, based on determining that the specified communication scheme is supported (1707), an operation of transmitting a discovery message including information on a specified frequency band of the specified communication scheme (1709), an operation of activating a function (or interface) for a second communication scheme, based on determining that the specified communication scheme is not supported (1711), and an operation of transmitting a discovery message including information on a specified frequency band of the second communication scheme (1713).

Referring to FIG. 17, in operation 1701, the processor 120 of the electronic device 101 may perform an operation of detecting reception of a discovery mode start message. According to an embodiment, the processor 120 may receive a discovery mode start message broadcasted by an external electronic device through OOB. According to an embodiment, the processor 120 may determine a trigger for initiating a discovery mode, based on detecting the reception of the discovery mode start message.

In operation 1703, the processor 120 may identify configuration information. According to an embodiment, the processor 120 may identify the configuration information included in the discovery mode start message to identify a communication scheme (or protocol) available for discovery by the electronic device 101.

In operation 1705, the processor 120 may perform an operation of determining whether a specified communication scheme (e.g., a first communication scheme) is supportable, based on the configuration information. According to an embodiment, the processor 120 may determine whether the specified communication scheme (e.g., the first communication scheme) is supported, based on the capability of the electronic device 101.

According to an embodiment, when the first communication scheme (or a first protocol) is supported, the processor 120 may further determine whether an operation by the first communication scheme is possible. For example, the processor 120 may determine whether the first communication scheme is available, based on whether a communication scheme currently being used is activated, based on the first communication circuit 710. For example, the processor 120 may assign priority to a second communication scheme when the second communication scheme is being used by the first communication circuit 710, and may determine that the first communication scheme is not supportable.

In operation 1707, the processor 120 may perform an operation of activating a function (or interface) for the specified communication scheme, based on determining in operation 1705 that the specified communication scheme (e.g., the first communication scheme) is supported (e.g., "Yes" in operation 1705). According to an embodiment, the processor 120 may activate the interface for the specified communication scheme (or the first communication scheme) through the first communication circuit 710 (e.g., the first communication circuit 710 of FIG. 7). For example, the processor 120 may control the first communication circuit 710 to activate short-range wireless communication based on NAN.

In operation 1709, the processor 120 may perform an operation of transmitting a discovery message including information on a specified frequency band of the first communication scheme. According to an embodiment, the processor 120 may transmit, to a specified external electronic device, a discovery message including information on determination of a first frequency band and the first communication scheme determined to be used for discovery of the external electronic device.

In operation 1711, the processor 120 may perform an operation of activating a function (or interface) for the second communication scheme, based on determining in operation 1705 that the specified communication scheme (e.g., the first communication scheme) is not supported (e.g., "No" in operation 1705) based on the configuration information. According to an embodiment, the processor 120 may activate the interface for the second communication scheme (or a second protocol) through the first communication circuit 710 (e.g., the first communication circuit 710 of FIG. 7). For example, the processor 120 may control the first communication circuit 710 to activate short-range wireless communication based on Wi-Fi Direct.

In operation 1713, the processor 120 may perform an operation of transmitting a discovery message including information on a specified frequency band (e.g., a third frequency band or a fourth frequency band) of the second communication scheme. According to an embodiment, the processor 120 may transmit, to a specified external electronic device, a discovery message including information on determination of the specified frequency band (e.g., the third frequency band or the fourth frequency band) and the second communication scheme determined to be used for discovery with the external electronic device.

An operation method performed by an electronic device 101 according to an embodiment of the disclosure may include an operation of detecting initiation of a service. The operation method may include an operation of configuring, based on detecting the initiation of the service, a discovery protocol for each of multiple frequency bands related to discovering, using a first communication circuit (e.g., the wireless communication module 192 of FIG. 1 and/or the first communication circuit 710 of FIG. 7) configured to support device-to-device (D2D) communication, an external electronic device for which the service is to be performed. The operation method may include an operation of transmitting a discovery mode start message through a second communication circuit (e.g., the wireless communication module 192 of FIG. 1 and/or the second communication circuit 740 of FIG. 7) configured to support out-of-band (OOB) communication. The operation method may include an operation of discovering at least one external electronic device through the first communication circuit, based on a protocol corresponding to each of the multiple frequency bands. The operation method may include an operation of determining one of the at least one discovered external electronic device as a service target device. The operation method may include an operation of performing a connection procedure with the external electronic device determined as the service target device.

According to an embodiment, the service may include a D2D service which can be provided based on a direct connection with the external electronic device determined as the service target device.

According to an embodiment, the discovery mode start message may include configuration information regarding the discovery protocol.

According to an embodiment, the configuration information may include information on different frequency bands related to a first protocol for simultaneously discovering the at least one external electronic device and/or a second protocol different from the first protocol.

According to an embodiment, the operation of transmitting the discovery mode start message may include an operation of transmitting the configuration information regarding the configured discovery protocol by using OOB communication through the second communication circuit.

According to an embodiment, the operation of configuring the discovery protocol may include an operation of configuring multiple discovery channels, based on each of a first frequency band and a second frequency band different from the first frequency band, based on heterogeneous protocols or a homogeneous protocol.

According to an embodiment, the operation of discovering the external electronic device may include an operation of performing discovery with at least one first external electronic device, based on a first protocol, and an operation of performing discovery with at least one second external electronic device, based on a second protocol.

According to an embodiment, the operation of discovering the external electronic device may include an operation of discovering at least one first external electronic device having determined a discovery mode in the first frequency band, and an operation of discovering at least one second external electronic device having determined a discovery mode in the second frequency band different from the first frequency band.

According to an embodiment, the operation of discovering the external electronic device may include an operation of discovering, based on a first frequency band according to a first protocol, at least one first external electronic device having determined a discovery mode in the first frequency band, and an operation of discovering, based on a second frequency band according to a second protocol different from the first protocol, at least one second external electronic device having determined a discovery mode in the second frequency band.

According to an embodiment, the operation of discovering the external electronic device may include an operation of discovering, based on a first frequency band according to a specified protocol, at least one first external electronic device having determined a discovery mode in the first frequency band, and an operation of discovering, based on a second frequency band according to the specified protocol, at least one second external electronic device having determined a discovery mode in the second frequency band.

According to an embodiment, the operation of determining the service target device may include an operation of generating a discovery list related to at least one external electronic device discovered based on the multiple frequency bands, and an operation of determining at least one external electronic device to be connected for the service as the service target device, based on the discovery list.

According to an embodiment, the operation of performing the connection procedure may include an operation of performing a direct connection with the external electronic device determined as the service target device, based on a protocol used to discover the external electronic device determined as the service target device.

According to an embodiment, the operation of performing the connection procedure may include an operation of, when the external electronic device determined as the service target device is a first external electronic device supporting a first protocol, performing a connection procedure with the first external electronic device through the first protocol used for discovery of the first external electronic device. According to an embodiment, the operation of performing the connection procedure may include an operation of, when the external electronic device determined as the service target device is a second external electronic device supporting a second protocol, performing a connection procedure with the second external electronic device through the second protocol used for discovery of the second external electronic device.

Various embodiments of the disclosure disclosed in the specification and drawings are merely to provide a specific example to easily describe the technical contents of the disclosure and to help understanding of the disclosure, and are not intended to limit the scope of the disclosure. Therefore, the scope of the disclosure should be interpreted to include all changes or modified forms derived based on the technical spirit of the disclosure in the scope of the disclosure in addition to the embodiments described herein.

## Claims

1. An electronic device comprising:
a first communication circuit configured to support device-to-device (D2D) communication;
a second communication circuit configured to support out-of-band (OOB) communication; and
at least one processor operatively connected to the first communication circuit and the second communication circuit,
wherein the at least one processor is configured to:
based on detecting initiation of a service, configure a discovery protocol for each of multiple frequency bands related to discovering, using the first communication circuit, an external electronic device for which the service is to be performed;
transmit a discovery mode start message through the second communication circuit;
discover at least one external electronic device through the first communication circuit, based on a protocol corresponding to each of the multiple frequency bands;
determine one of the discovered at least one external electronic device as a service target device; and
perform a connection procedure with the external electronic device determined as the service target device.

2. The electronic device of claim 1, wherein the service comprises a D2D service which can be provided based on a direct connection with the external electronic device determined as the service target device.

3. The electronic device of claim 1, wherein the discovery mode start message comprises configuration information regarding the discovery protocol, and
wherein the configuration information comprises information on different frequency bands related to a first protocol for simultaneously discovering the at least one external electronic device, and/or a second protocol different from the first protocol.

4. The electronic device of claim 1, wherein the at least one processor is configured to configure multiple discovery channels, based on each of a first frequency band and a second frequency band different from the first frequency band, based on heterogeneous protocols or a homogeneous protocol.

5. The electronic device of claim 1, wherein the at least one processor is configured to:
perform discovery with at least one first external electronic device, based on a first protocol; and
perform discovery with at least one second external electronic device, based on a second protocol.

6. The electronic device of one of claims 1 to 5, wherein the at least one processor is configured to:
based on a first frequency band according to a first protocol, discover at least one first external electronic device having determined a discovery mode in the first frequency band; and
based on a second frequency band according to a second protocol different from the first protocol, discover at least one second external electronic device having determined a discovery mode in the second frequency band.

7. The electronic device of one of claims 1 to 5, wherein the at least one processor is configured to:
based on a first frequency band according to a specified protocol, discover at least one first external electronic device having determined a discovery mode in the first frequency band; and
based on a second frequency band according to the specified protocol, discover at least one second external electronic device having determined a discovery mode in the second frequency band.

8. The electronic device of one of claims 1 to 5, wherein the at least one processor is configured to:
generate a discovery list related to at least one external electronic device discovered based on the multiple frequency bands; and
based on the discovery list, determine at least one external electronic device to be connected for the service as the service target device.

9. The electronic device of one of claims 1 to 5, wherein the at least one processor is configured to perform a direct connection with the external electronic device determined as the service target device, based on a protocol used to discover the external electronic device determined as the service target device.

10. The electronic device of claim 9, wherein the at least one processor is configured to:
in case that the external electronic device determined as the service target device is a first external electronic device supporting a first protocol, perform a connection procedure with the first external electronic device through the first protocol used for discovery of the first external electronic device; and
in case that the external electronic device determined as the service target device is a second external electronic device supporting a second protocol, perform a connection procedure with the second external electronic device through the second protocol used for discovery of the second external electronic device.

11. An operation method of an electronic device, the method comprising:
based on detecting initiation of a service, configuring a discovery protocol for each of multiple frequency bands related to discovering, using a first communication circuit configured to support device-to-device (D2D) communication, an external electronic device for which the service is to be performed;
transmitting a discovery mode start message through a second communication circuit configured to support out-of-band (OOB) communication;
discovering at least one external electronic device through the first communication circuit, based on a protocol corresponding to each of the multiple frequency bands;
determining one of the at least one discovered external electronic device as a service target device; and
performing a connection procedure with the external electronic device determined as the service target device.

12. The method of claim 11, wherein the configuring of the discovery protocol comprises configuring multiple discovery channels, based on each of a first frequency band and a second frequency band different from the first frequency band, based on heterogeneous protocols or a homogeneous protocol.

13. The method of claim 11, wherein the discovering of the external electronic device comprises:
performing discovery with at least one first external electronic device, based on a first protocol; and
performing discovery with at least one second external electronic device, based on a second protocol.

14. The method of one of claims 11 to 13, wherein the discovering of the external electronic device comprises:
discovering at least one first external electronic device having determined a discovery mode in a first frequency band; and
discovering at least one second external electronic device having determined a discovery mode in a second frequency band different from the first frequency band.

15. The method of one of claims 11 to 13, wherein the performing of the connection procedure comprises performing a direct connection with the external electronic device determined as the service target device, based on a protocol used to discover the external electronic device determined as the service target device.
